# EUROPÄISCHE PATENTSCHRIFT

(11) **EP 1 931 957 B1**
(45) Veröffentlichungstag und Bekanntmachung des Hinweises auf die Patenterteilung: **11.05.2011**
(21) Anmeldenummer: 06805968.2
(22) Anmeldetag: 29.09.2006
(51) Int. Cl.: G01L 5/28

(54) **VERFAHREN UND VORRICHTUNG ZUR PRÜFUNG DER BREMSWIRKUNG EINES KRAFTFAHRZEUGS MIT MINDESTENS ZWEI ANGETRIEBENEN ACHSEN**
METHOD AND DEVICE FOR TESTING THE BRAKING ACTION OF A MOTOR VEHICLE HAVING AT LEAST TWO DRIVEN AXLES
PROCEDE ET DISPOSITIF POUR CONTROLER L'EFFET DE FREINAGE D'UN VEHICULE A MOTEUR EQUIPE D'AU MOINS DEUX ESSIEUX ENTRAINES

(30) Priorität: 06.10.2005 DE 102005047970
(43) Veröffentlichungstag der Anmeldung: 18.06.2008
(60) Teilanmeldung: 11002506.1
(73) Patentinhaber: Sherpa Autodiagnostik GmbH, 84453 Mühldorf (DE)
(72) Erfinder: RISCHKE, Manfred, 87749 Hawangen (DE)
(74) Vertreter: Manitz, Gerhart
(86) Internationale Anmeldenummer: PCT/EP2006/009490
(87) Internationale Veröffentlichungsnummer: WO 2007/039251

(56) Entgegenhaltungen:
- EP-A- 0 623 813
- EP-A- 1 283 415
- EP-A2- 0 236 715
- EP-A2- 0 522 329
- DE-A1- 2 518 850
- GB-A- 1 284 498
- US-A1- 4 750 354

## Beschreibung

Die vorliegende Erfindung betrifft ein Verfahren zur Prüfung der Bremswirkung der einzelnen Bremsen eines Kraftfahrzeugs entsprechend den Oberbegriffen der Ansprüche 1, 6 und 15 sowie entsprechende Vorrichtungen. Es sind bereits viele Vorschläge gemacht worden, wie die Prüfung der Bremswirkung der einzelnen Bremsen eines Kraftfahrzeugs mit mindestens zwei angetriebenen Achsen, die miteinander über ein starres oder quasi-starres Antriebssystem gekoppelt sind, vorgenommen werden kann.

Zur Prüfung der Bremsen von Fahrzeugen mit nur einer angetriebenen Achse sind so genannte Rollenprüfstände seit langem bekannt, bei welchen zwei Rollenpaare vorgesehen sind, die von jeweiligen Antriebseinrichtungen gedreht werden. Bei der Durchführung der Prüfung wird das Fahrzeug, beispielsweise zuerst mit den Vorderrädern, auf die zwei Rollenpaare gefahren, die jeweiligen Antriebseinrichtungen bzw. die Antriebsmotoren dieser Antriebseinrichtungen werden mit gleicher Geschwindigkeit gedreht und der Fahrer drückt auf das Bremspedal des Kraftfahrzeugs. Die an den Rollen entstehenden Bremskräfte werden ermittelt, angezeigt und häufig auch gespeichert und ausgedruckt. Die Bremskraft, die an den einzelnen Rollenpaaren durch Betätigung der Fahrzeugbremsen entstehen, können beispielsweise durch Messsensoren gemessen werden, die die Reaktionskraft der Antriebsmotoren ermitteln. Eine andere Möglichkeit besteht darin, die Motorenstromänderung der einzelnen Antriebsmotoren der Antriebseinrichtungen zu ermitteln. Für diese Variante müssen die Motoren angesteuert werden, um eine vorgegebene Geschwindigkeit trotz Betätigung der Bremse zu erzeugen.

Ein solches Messsystem ist beispielsweise in Abschnitt 33.3 des Buches "Kraftfahrzeugtechnik" vom Westermann Verlag, ISBN 3-14-22 1500-X beschrieben.

Bekannt sind auch Brems- und Prüfstände, bei denen anstelle von Rollenpaaren umlaufende Bänder zum Antreiben der jeweiligen Räder verwendet werden. Ansonsten gilt das bisher gesagte auch für solche Bremsprüfstände, die auch bei der vorliegenden Erfindung zur Anwendung gelangen können.

Bei Kraftfahrzeugen mit mindestens zwei angetriebenen Achsen, vor allem bei so genannten Allradfahrzeugen, können solche herkömmlichen Bremsprüfstände nicht verwendet werden. Bei solchen Kraftfahrzeugen mit mindestens zwei angetriebenen Achsen sind die Räder jeder angetriebenen Achse miteinander über ein Ausgleichsgetriebe und die angetriebenen Achsen untereinander mit einem starren oder quasistarren Antriebssystem, wie beispielsweise ein Antriebssystem mit beschränktem Schlupf, gekoppelt.

Bei einem solchen Kraftfahrzeug entstehen mehrere Probleme, wenn man versuchen würde, die Bremsen mit einem herkömmlichen Prüfstand zu prüfen.

Wenn nur zwei Rollenpaare vorgesehen werden, werden aufgrund des starren oder quasi starren Antriebssystems, beispielsweise beim Prüfen der Vorderräder, auch die Hinterräder mit angetrieben, wodurch sich das Fahrzeug aus dem Prüfstand zu schieben versucht. Man könnte zwar diese Auswirkung dadurch verhindern, dass man die Hinterräder aufbockt, dies würde aber trotzdem nicht zu einer zufrieden stellenden Bremsprüfung führen, da die Kopplung der zwei Achsen und daher der Räder miteinander dazu führt, dass bei einer defekten Bremse an einem Rad die Bremswirkung an den funktionierenden Bremsen auch auf das entsprechende Rad mit der defekten Bremse übertragen wird, so dass ein falsches Messergebnis angezeigt wird.

Um hier Abhilfe zu schaffen, wurde in der DE-OS 25188850 der Vorschlag gemacht, die Bremsprüfung für die linke und rechte Bremse einer der Achsen durchzuführen, während die Räder der anderen Achse stillstehen und die linken und rechten Räder der geprüften Achse in unterschiedliche Drehrichtungen durch die jeweiligen Antriebseinrichtungen des Prüfstands gedreht werden, die jeweilige getrennt ansteuerbare Antriebsmotoren aufweisen und ausgelegt sind, um die/das von den Rädern ausgeübte Bremskraft bzw. -moment bei einer erwünschten Geschwindigkeit zu ermitteln.

Diese Vorgehensweise bedeutet, dass bei gleicher Geschwindigkeit der sich in entgegengesetzten Richtungen drehenden Räder der geprüften Achse das starre oder quasi-starre Antriebssystem, das die Kopplung mit der zweiten angetriebenen Achse bzw. mit weiteren angetriebenen Achsen bewirkt, stillsteht, wodurch das Fahrzeug sich nicht mehr aus dem Prüfstand zu schieben versucht.

Unterschiedliche Drehgeschwindigkeiten der beiden Räder können trotz des Antreibens der Räderpaare der einzelnen Antriebseinrichtungen mit der gleichen erwünschten Geschwindigkeit auftreten, wenn der Reifen des einen Rades einen unterschiedlichen Radumfang zum anderen Rad aufweist. Solche unterschiedlichen Radumfänge können beispielsweise durch unterschiedliche Reifendrücke oder durch Abnützung oder gar durch falsche Reifenwahl entstehen.

Da die Antriebseinrichtungen des Prüfstands versuchen, die Räder mit der gleichen Umfangsgeschwindigkeit anzutreiben, führen die unterschiedlichen Radumfänge dazu, dass die Räder versuchen, sich mit unterschiedlichen Winkelgeschwindigkeiten zu drehen. Dies lässt das Antriebssystem, das die Kopplung mit der weiteren Achse bewirk, deren Räder stillstehen, aber im Wesentlichen nicht zu. Es entsteht Schlupf und ein Kräfteausgleich zwischen den Rädern der geprüften Achse. Selbst wenn das Antriebssystem, das die beiden Achsen miteinander koppelt, einen gewissen Schlupf zulässt, beispielsweise aufgrund einer Viskosekupplung, erfolgt eine gewisse Kraftübertragung von einem Rad zum anderen. D.h. bei ungleicher Drehgeschwindigkeit der beiden Räder der geprüften Achse erfolgt eine Kraftübertragung von der einen Seite auf die andere Seite, wodurch ebenfalls die Bremswerte verfälscht werden. Dies kann soweit gehen, dass, wenn die eine Radbremse vollkommen defekt ist, die Bremswirkung der anderen Radbremse dennoch ausreicht, um ein positives Messergebnis für das Rad mit der defekten Bremse zu erzeugen.

Zwar wird das Problem der ungleichen Drehgeschwindigkeiten in der DE-OS 25 188 50 angesprochen, die angegebene Lösung des Anhebens der Räder der nicht geprüften Achse, damit es durchdrehen kann, funktioniert aber nicht. Dies ist darauf zurückzuführen, dass bei Betätigen der Bremse das angehobene Rad entweder blockiert wird und sich somit genauso verhält als ob es auf dem Boden steht oder langsamer wird und Kräfte in das Antriebssystem einführt, die das Messergebnis verfälschen.

Dieses Verfahren ist nicht nur kompliziert, sondern es treten auch immer noch Verfälschungen der gemessenen Bremswerte auf.

Nach Prüfung der Räder der ersten Achse kann das Fahrzeug weitergefahren werden, so dass die Räder der zweiten Achse auf die Antriebseinrichtung des Prüfstands zu liegen kommen und es kann die Prüfung für die zweite Achse wiederholt werden.

Da bei manchen Bremsenarten die entstehenden Bremskräfte bei Drehung des Rades entgegen der üblichen Fahrtrichtung im Vergleich zum Antrieb in die Fahrtrichtung zu unterschiedlichen Messergebnissen führen, werden auch häufig nach der Prüfung der Bremsen der einen Achse die Drehrichtungen der jeweiligen Antriebseinrichtungen umgeschaltet und die Bremsprüfung wiederholt. Nur die Bremswerte, die entsprechend der normalen Fahrrichtung des Fahrzeugs gemessen werden, werden berücksichtigt. Zwar ist dies bei Scheibenbremsen nicht mehr unbedingt erforderlich, kann aber dennoch praktiziert werden.

Um das Problem der Verfälschung der Messwerte aufgrund von unterschiedlichen Radumfängen in den Griff zubekommen, ist in der DE-PS 3603508 bzw. in der entsprechenden EP 0 236 715 B1 bereits vorgeschlagen worden, während des Bremsvorgangs die Drehgeschwindigkeit, d.h. die Winkelgeschwindigkeit der angetriebenen Räder direkt zu messen, und durch Steuerung der Antriebe der diese Räder antreibenden Rollensätze, d.h. durch Steuerung der Motoren der die Räder antreibenden Antriebseinrichtungen, gleich groß zu halten. Dies ist zwar machbar, erfordert aber auch eine entsprechende Messeinrichtung für die beiden geprüften Räder, die wie bisher in unterschiedliche Drehrichtungen gedreht werden.

Eine Weiterbildung dieses Systems ist in der EP 1 283 415 A2 beschrieben. Bei dem dortigen Verfahren werden alle angetriebenen Räder jeweils auf ein Rollenpaar gesetzt und in die gleiche Drehrichtung angetrieben. Während des Bremsvorgangs werden die Radumfangsgeschwindigkeiten und/oder die Winkelgeschwindigkeiten der Räder gemessen und durch eine Regelung der jeweiligen Rollenantriebe auf eine im Wesentlichen gleiche Geschwindigkeit geregelt.

Dies bedeutet, dass zur Prüfung eines Kraftfahrzeuges mit beispielsweise zwei angetriebenen Achsen vier Rollenpaare vorgesehen werden müssen, und für jedes Rad muss auch ein eigenes Messsystem vorgesehen werden, um die jeweilige Drehgeschwindigkeit zu ermitteln. Jedes Messsystem kann beispielsweise durch ein Reflektorelement realisiert werden, das auf das jeweilige Rad angebracht und von einer Lichtschranke abgetastet wird. Das System ist durchaus praktikabel, aber dennoch aufwändig.

Zusammenfassend kann man daher folgendes festhalten:
Bei einer Bremsenprüfung mit mehrachsigen Fahrzeugen auf Rollen-Bremsenprüfständen ist es üblich, mit den Rädern einer Achse in die Prüfstandrollen zu fahren und die Bremswerte der beiden vorwärts drehenden Räder zu ermitteln.
Bei Fahrzeugen mit Mehrachsantrieb kann je nach Antriebssystem die Bremskraft der einzelnen Radbremsen über das Antriebsystem auf die anderen Radbremsen übertragen werden. Bei einer Bremsenprüfung der Radbremsen sollte jedoch die Bremswirkung der einzelnen Radbremsen und nicht der Bremskraftübertrag über das Antriebssystem ermittelt werden.

Die größten Probleme treten bei Allradfahrzeugen mit starrem oder quasistarrem Antriebssystem auf.

Je nach Stärke der Allrad-Kraftübertragung wird das Fahrzeug durch die anderen Antriebsachsen aus den Prüfrollen geschoben, oder es ist durch die Einwirkung des Allradsystems ein erhöhter Rollwiderstand vorhanden. Dieser erhöhte Rollwiderstand kann die Messwerte der Bremsprüfung enorm verfälschen.

Damit derartige Fahrzeuge auf einem Rollen-Bremsenprüfstand geprüft werden können ist es seit langer Zeit üblich, die Räder der zu prüfenden Achse gegeneinander (eine Seite vorwärts und eine Seite rückwärts) zu drehen. Damit wird auf jeden Fall der Krafteinfluss von der Kardanwelle auf die zu prüfende Achse eliminiert oder verringert. Die Funktion der Rollen-Bremsenprüfstände ist so aufgebaut, dass die Elektromotore mit einer fixierten Geschwindigkeit die Prüfrollen antreiben und diese wiederum die Räder des Fahrzeuges. Solange die beiden Räder einer Achse exakt denselben Radumfang haben, laufen die beiden Achswellen bei Drehrichtungsumkehr gegeneinander auch in derselben Geschwindigkeit. Sollte jedoch der Umfang der Räder unterschiedlich sein, wie zum Beispiel bei unterschiedlichem Reifenluftdruck oder unterschiedlicher Profilhöhe, verändert sich die Geschwindigkeit an den beiden Achswellen, da der Antrieb der Räder durch die Antriebsrollen des Bremsenprüfstandes erfolgt. In diesem Fall muss die Kardanwelle den Drehzahlunterschied ausgleichen.

Wenn diese jedoch durch den Allradantriebsstrang ganz oder teilweise blockiert ist, findet auf der zu prüfenden Achse ein Kraftübertag von einer Seite zur anderen statt.

Dieser Kraftübertrag beeinflusst den Messwert der Bremsanzeige in erheblichem Maße.

Dies kann soweit führen, dass eine auf einer Seite unwirksame Bremse durch die Bremswirkung der anderen Seite den kompletten Bremskraftübertrag erhält und somit beide Seiten den gleichen Bremswert anzeigen, obwohl eine Bremse komplett unwirksam ist.

Wenn bei einer komplett blockierten Kardanwelle auf der zu prüfenden Achse eine Radbremse teilweise oder komplett ausgefallen ist, wird die Bremswirkung der funktionierenden Bremse über die Achswellen auf die andere Seite komplett übertragen.

Damit dieser Kraftübertag vermieden wird, ist eine Regelung erforderlich, welche die beiden Achswellen auf die gleiche Prüfgeschwindigkeit bringt und während dem gesamten Bremsvorgang beibehält.

Aufgabe der vorliegenden Erfindung ist es, Verfahren und Vorrichtungen vorzuschlagen, die eine zuverlässige Ermittlung der Bremswirkung der einzelnen Bremsen eines Kraftfahrzeugs mit mindestens zwei angetriebenen Achsen bei geringem Aufwand ermöglicht, und zwar ohne die Notwendigkeit, eine gesonderte Messeinrichtung für die Winkelgeschwindigkeit der Räder vorzusehen. Ferner sollen ein Verfahren und eine Vorrichtung vorgeschlagen werden, die eine automatische Erkennung ermöglichen, ob es sich bei dem zu prüfenden Kraftfahrzeug um ein Kraftfahrzeug mit mindestens zwei angetriebenen Achsen oder ein Fahrzeug mit nur einer angetriebenen Achse handelt.

Zur Lösung dieser Aufgabe wird ein Verfahren entsprechend dem Oberbegriff des Anspruchs 1, der den Stand der Technik gemäß DE-OS 25188850 bzw. EP 0236715 B1 berücksichtigt, vorgesehen, das sich dadurch auszeichnet, dass
a) der Antriebsmotor eines der linken und rechten Räder das entsprechende Rad auf die erwünschte Geschwindigkeit bringt,
b) der Antriebsmotor des jeweils anderen Rades, dieses bei gelösten Bremsen über einen Geschwindigkeitsbereich antreibt, der üblicherweise die erwünschte Geschwindigkeit umfasst, um die jeweilige Geschwindigkeit zu ermitteln, bei der der kleinste Rollwiderstand vorliegt und
c) die Antriebsmotoren mindestens für die unmittelbar anschließende Bremsprüfung bei den entsprechenden Geschwindigkeiten angetrieben werden, für die der kleinste Rollwiderstand ermittelt wurde.

Es wurde nämlich erfindungsgemäß anerkannt, dass wenn ein Rad mit der erwünschten Geschwindigkeit angetrieben wird, der kleinste Rollwiderstand bei dem weiteren Rad der gleichen Achse dann gemessen wird, wenn sich dieses Rad mit der gleichen Winkelgeschwindigkeit dreht wie das Rad, das mit der erwünschten Geschwindigkeit gedreht wird.

Man kann sich diese Situation wie folgt vorstellen. Normalerweise steigt der Rollwiderstand eines Rades mit der Geschwindigkeit. Bei einer Achse, bei der die Räder mit unterschiedlichen Drehrichtungen angetrieben werden, mit der Absicht, das die Kardanwelle stillsteht, d.h. dass die Winkelgeschwindigkeit der beiden Räder gleich ist, wird beim Stillstand der Kardanwelle kein Drehmoment zwischen den beiden Rädern übertragen. Wenn das Rad, bei dem der kleinste Rollwiderstand ermittelt werden soll, sich bei einer Winkelgeschwindigkeit dreht, die kleiner ist als die Winkelgeschwindigkeit des Rades, das bei der erwünschten Geschwindigkeit angetrieben wird, wird ein Drehmoment vom Rad, das bei der erwünschten Geschwindigkeit dreht, auf das Rad, bei dem der kleinste Rollwiderstand ermittelt werden soll, übertragen und wird versuchen, dieses Rad zu beschleunigen. Da die diesem Rad zugeordnete Antriebseinrichtung aber ausgelegt ist, eine bestimmte Geschwindigkeit einzuhalten, muss der Motor der Antriebseinrichtung sozusagen gegen diese Drehmomentübertragung kämpfen. Dies äußert sich als ein erhöhter Rollwiderstand.

Läuft dagegen das Rad, bei dem der kleinste Rollwiderstand ermittelt werden soll, mit einer Winkelgeschwindigkeit größer als die des Rades, das mit der erwünschten Geschwindigkeit gedreht wird, so wird ein Drehmoment vom Rad, bei dem der kleinste Rollwiderstand ermittelt werden sollte, auf das Rad übertragen, das bei der erwünschten Geschwindigkeit läuft. Somit muss die Antriebseinrichtung, die das Rad, bei dem der kleinste Rollwiderstand ermittelt werden soll, ebenfalls mehr Leistung erzeugen, und es wird ein erhöhter Rollwiderstand ermittelt. Gerade der Zustand, bei dem der Rollwiderstand am kleinsten ist, entspricht dem ausgeglichenen Zustand, bei dem beide Räder mit der gleichen Winkelgeschwindigkeit gedreht werden. Aufgrund von Umständen, wie unterschiedliche Reifendrücke, unterschiedliche Profiltiefen oder gar unterschiedliche Reifen auf den beiden Rädern, werden im ausgeglichenen Zustand die linearen Geschwindigkeiten der Oberfläche der Reifen unterschiedlich sein, so dass die erwünschte Geschwindigkeit und die ermittelte Geschwindigkeit unterschiedlich sind.

Wenn daher das Rad, bei dem der kleinste Rollwiderstand ermittelt werden soll, über einen Geschwindigkeitsbereich angetrieben wird, der Geschwindigkeiten umfasst, die kleiner und größer sind als die Winkelgeschwindigkeit des Rades, das mit der erwünschten Geschwindigkeit läuft, wird in diesem Geschwindigkeitsbereich stets eine Geschwindigkeit ermittelt, bei der der kleinste Rollwiderstand vorliegt. Dies äußert sich im Drehmoment, das vom Motor der jeweiligen Antriebseinrichtung erzeugt wird und ebenfalls im Reaktionsmoment, das vom Motor auf den Rahmen des Prüfstands ausgeübt wird, und kann somit mit der ohnehin vorhandenen Messeinrichtung des Brems-Prüfstandes ermittelt werden, d.h. es ist keine weitere Messeinrichtung erforderlich, um die Geschwindigkeit zu ermitteln. Wenn aber die Geschwindigkeit gefunden ist, bei der der kleinste Rollwiderstand vorliegt, wird die entsprechende Antriebseinrichtung mit dieser Geschwindigkeit für die weitere Prüfung angetrieben. Es wird hiermit sichergestellt, dass die beiden Räder der Achse für die Bremsprüfung vollständig voneinander entkoppelt sind.

Obwohl der Geschwindigkeitsbereich normalerweise die erwünschte Geschwindigkeit umfassen wird, ist dies nicht unbedingt erforderlich.

Denkbar wäre es, dass beim Antreiben des Rades, bei dem der kleinste Rollwiderstand ermittelt werden soll, bei einer Geschwindigkeit kleiner als die Winkelgeschwindigkeit des Rades, das bei der erwünschten Geschwindigkeit läuft, und anschließender Erhöhung der Geschwindigkeit des Rades, bei dem der kleinste Rollwiderstand ermittelt werden soll, das Minimum des Rollwiderstands vor dem Erreichen einer Geschwindigkeit, die der erwünschten Geschwindigkeit entspricht, festgestellt wird. Es wäre dann nicht mehr notwendig, die Geschwindigkeit weiter zu erhöhen.

Es ist ebenfalls denkbar, dass beim Antreiben des Rades, bei dem der kleinste Rollwiderstand ermittelt werden soll, bei einer Geschwindigkeit, die zunächst höher liegt als die erwünschte Geschwindigkeit, und anschließender Herabsetzung der Geschwindigkeit in Richtung der erwünschten Geschwindigkeit, die Geschwindigkeit, bei der der kleinste Rollwiderstand ermittelt wird, bereits bei einer Geschwindigkeit festgestellt wird, die höher ist, als die erwünschte Geschwindigkeit, so dass es auch hier nicht mehr notwendig wäre, die Geschwindigkeit des entsprechenden Rades, bei dem der kleinste Rollwiderstand ermittelt werden soll, weiter herabzusetzen.

Der Vollständigkeit halber soll auch darauf hingewiesen werden, dass es nicht zwingend ist, dass eine Bremse jeweils nur einem Rad zugeordnet ist. Es ist durchaus denkbar, beispielsweise bei Fahrzeugen mit Zwillingsbereifung, dass zwei Räder einer Bremse zugeordnet werden und der Ausdruck "Rad" in dieser Anmeldung ist entsprechend zu verstehen, d.h. kann auch mehrere Räder umfassen.

Bei einer Bremsprüfung kann es vorkommen, dass der Prüfer nicht überzeugt ist, dass die ermittelten Bremswerte richtig sind, und dass er aus diesem Grund die Bremsprüfung wiederholen möchte. Für diesen Fall können die erwünschte Geschwindigkeit und die erfindungsgemäß ermittelte Geschwindigkeit für weitere Bremsprüfungen des Prüflaufs der jeweiligen Achse beibehalten werden.

Alternativ hierzu kann die jeweilige Geschwindigkeit, bei der der kleinste Rollwiderstand vorliegt, für weitere Bremsprüfungen der jeweiligen Achse jeweils neu ermittelt werden.

Somit führt die vorliegende Erfindung zu einer automatischen Entkopplung der Räder der geprüften Achse. Die automatische Entkoppelung erfolgt durch Ermittlung der Verlustleistung im Antriebssystem, welche Auskunft über den Kraftübertrag der Achsverbindungskräfte untereinander gibt. Durch die automatische Geschwindigkeitsregelung der Prüfstandrollen werden die Antriebsachsen der zu prüfenden Achse auf die gleiche Geschwindigkeit gebracht. Damit steht die Kardanwelle in einer Ruheposition und somit erfolgt kein Kraftübertrag der Achsen untereinander. Anders ausgedrückt erfolgt beim erfindungsgemäßen System die Ermittlung der Rollwiderstände an den beiden zu prüfenden Rädern. Nach dem Prüfstandstart wird die Prüfgeschwindigkeit der beiden Räder kurzzeitig in eine höhere und eine geringere Prüfgeschwindigkeit gebracht und der dabei am geringsten aufgetretene Rollwiderstand ermittelt. Die Antriebsmotore des Bremsenprüfstandes werden in ihrer Geschwindigkeit so geregelt, dass an dem jeweiligen Rad der geringst mögliche Rollwiderstand auftritt. Damit ist gewährleistet, dass keinerlei Bremskraft-Rückübertragung der einzelnen Radbremsen über das Antriebsystem erfolgt.

Die bei geringstem Rollwiderstand vorhandene Prüfgeschwindigkeit wird dann als Referenz-Prüfgeschwindigkeit für den gesamten Bremsvorgang vorgegeben und beibehalten.

Nach dem Lösen der Bremse kann automatisch wieder die Rollwiderstandsermittlung erfolgen und, wenn erforderlich, auch der Prüfgeschwindigkeitsausgleich.

Sollte der Prüfer bei der Durchführung einer Bremsprüfung es für notwendig erachten, die Prüfung der einzelnen Bremsen nur dann vorzunehmen, wenn das geprüfte Rad in die normale Fahrtrichtung dreht und somit die Drehrichtungen der Antriebseinrichtungen geändert werden müssen, muss eine besondere Vorgehensweise gewählt werden. Hier wird erfindungsgemäß so vorgegangen, dass bei der Prüfung der Bremse auf der einen Seite des Fahrzeugs, bei der das Rad in die normale Fahrtrichtung dreht, die auf das Bremspedal einwirkende Kraft oder ein entsprechender Wert, wie beispielsweise der Bremsleitungsdruck, ermittelt wird, die Drehrichtung der linken und rechten Räder dann geändert wird und die Bremsprüfung bei der gleichen auf das Bremspedal einwirkenden Kraft bzw. bei dem gleichen dieser entsprechenden Wert wiederholt wird, Nur die Bremswerte für die in die Fahrtrichtung laufenden Räder oder ein Mittelwert der Bremswerte aus den beiden Bremsprüfungen werden dann für das Prüfergebnis berücksichtigt und auch nur dann, insofern sie bei gleichem Bremsleitungsdruck bzw. bei einem entsprechenden Wert ausgeübt werden.

Nach der Prüfung der Bremsen der einen Achse wird das Fahrzeug mit den Rädern der zweiten Achse auf die Antriebseinrichtungen des Prüfstands gestellt und die Prüfung der Bremsen der zweiten Achse erfolgt entsprechend, während die Räder der ersten Achse stillstehen.

Die Erfindung kann aber auch mit Bremsprüfständen verwendet werden, die entsprechende Antriebseinrichtungen für alle Räder der angetriebenen Achsen aufweist. Das Verfahren wird dann ähnlich dem in der EP 1283415 A2 beschriebenen Verfahren durchgeführt in dem Sinne, dass alle Antriebseinrichtungen in die gleiche Drehrichtung gedreht werden. Diese Möglichkeit ist im Oberbegriff des Anspruchs 6 berücksichtigt. Gemäß der Erfindung wird dann so vorgegangen, dass
a) die der einen Achse zugeordneten Antriebseinrichtungen, d.h. die diesen zugeordneten Antriebsmotoren, angesteuert werden, um die Räder dieser Achse auf die erwünschte Geschwindigkeit zu bringen,
b) die der zweiten Achse zugeordneten Antriebseinrichtungen, d.h. die dieser zugeordneten Antriebseinrichtungen bei gelösten Bremsen, angesteuert werden, um die Räder dieser Achse gemeinsam über einen Geschwindigkeitsbereich anzutreiben, der üblicherweise die erwünschte Geschwindigkeit umfasst, um die Geschwindigkeit dieser Räder zu ermitteln, bei denen der kleinste Rollwiderstand vorliegt,
c) für jede Achse die Antriebseinrichtung für eines der Räder vom jeweiligen Antriebsmotor bei gelösten Bremsen bei der erwünschten Geschwindigkeit bzw. bei der ermittelten Geschwindigkeit angetrieben wird und das jeweils andere Rad durch die jeweilige Antriebseinrichtung über einen Geschwindigkeitsbereich angetrieben wird, der üblicherweise die erwünschte Geschwindigkeit bzw. die ermittelte Geschwindigkeit umfasst, um die jeweilige Geschwindigkeit zu ermitteln, bei der der kleinste Rollwiderstand vorliegt,
d) die Antriebsmotoren mindestens für die unmittelbar anschließende Bremsprüfung bei den entsprechenden Geschwindigkeiten angetrieben werden, für die die kleinsten Rollwiderstände ermittelt wurden.

Auch hier wird für die einzelnen Räder der kleinstmögliche Rollwiderstand ermittelt und die Antriebsgeschwindigkeit der einzelnen Räder so gewählt, dass sie immer bei der Geschwindigkeit gedreht werden, die zu den kleinsten Rollwiderstandswerten führen. Der Vorteil der Erfindung wird auch hier erreicht. Man braucht hier keine gesonderten Messeinrichtungen, um die Winkelgeschwindigkeit der einzelnen Räder zu ermitteln.

Bevorzugte Ausführungsformen dieses Verfahrens sind den Ansprüchen 7 bis 9 zu entnehmen.

Da es nicht zu erwarten ist, dass Werkstätten üblicherweise über einen Prüfstand verfügen, der nur für Kraftfahrzeuge mit mehreren angetriebenen Achsen verwendet wird, d.h. dass der Bremsprüfstand auch für Kraftfahrzeuge mit nur einer angetriebenen Achse verwendet wird, und es unter Umständen schwierig ist zu ermitteln, ob ein Fahrzeug eines bestimmten Fabrikats tatsächlich mit Allradantrieb ausgestattet ist, da häufig Fahrzeuge der gleichen Bauart wahlweise mit einer angetriebenen Achse oder mit Allradantrieb ausgestattet werden, ist es außerordentlich nützlich, wenn vom Prüfstand automatisch anerkannt wird, ob es sich um ein Kraftfahrzeug mit mehreren angetriebenen Achsen handelt.

Um dies festzustellen, wird zusätzlich vorgesehen, dass zunächst der Antriebsmotor einer der Antriebseinrichtungen gestartet wird und bei der anderen Antriebseinrichtung oder bei mindestens einer der weiteren Antriebseinrichtungen ermittelt wird, ob das dieser jeweils zugeordnete Rad in die entgegengesetzte Drehrichtung zu drehen versucht.

Wenn das der weiteren Antriebseinrichtung zugeordnete Rad nicht versucht, sich in die entgegengesetzte Drehrichtung zu drehen, wird das Kraftfahrzeug als Kraftfahrzeug ohne zwei gekoppelte Achsen anerkannt und die Bremsprüfung wie für ein Kraftfahrzeug ohne Allradantrieb vorgenommen.

Wenn aber das der weiteren Antriebseinrichtung zugeordnete Rad versucht, sich in die entgegengesetzte Drehrichtung zu drehen, wird das Kraftfahrzeug als Kraftfahrzeug mit mindestens zwei angetriebenen Achsen anerkannt und die Bremsprüfung entsprechend einem der oben genannten Verfahren 1 bis 9 oder entsprechend einem anderen Verfahren vorgenommen. Die erfindungsgemäßen Vorrichtungen sind den Ansprüchen 12 bis 14 zu entnehmen.

Dieses Verfahren lässt sich anwenden, egal ob es sich um einen Prüfstand mit zwei Antriebseinrichtungen für die Räder einer angetriebenen Achse oder einen Prüfstand mit mehreren Antriebseinrichtungen für alle Räder der angetriebenen Achse handelt.

Die Erfindung wird nachfolgend näher erläutert anhand von Ausführungsbeispielen unter Bezugnahme auf die Zeichnung in welcher zeigen:
- Fig. 1: Eine Draufsicht auf ein Kraftfahrzeug in Form eines PKWs mit zwei angetriebenen Achsen, d.h. mit Allradantrieb, wobei nur die wesentliche Komponente des Antriebssystems gezeigt sind,
- Fig. 2: eine Draufsicht von oben auf einen Rollenprüfstand mit zwei Paaren von angetriebenen Rollen für die Räder einer Achse ei- nes Kraftfahrzeugs,
- Fig. 3: eine Querschnittszeichnung entsprechend dem Pfeil III-III der Fig. 2, jedoch zu einem größeren Maßstab, um die Arbeitswei- se des Rollenprüfstands näher zu erläutern,
- Fig. 4: eine schematische Seitenansicht eines PKWs mit Allradan- trieb, der sich auf einem Rollenprüfstand befindet mit vier Rollenpaaren (nur zwei gezeigt), wobei das System entspre- chend der Erfindung ausgelegt ist und
- Fig. 5: eine Graphik zur Darstellung der Ermittlung des kleinsten Rollwiderstandes.

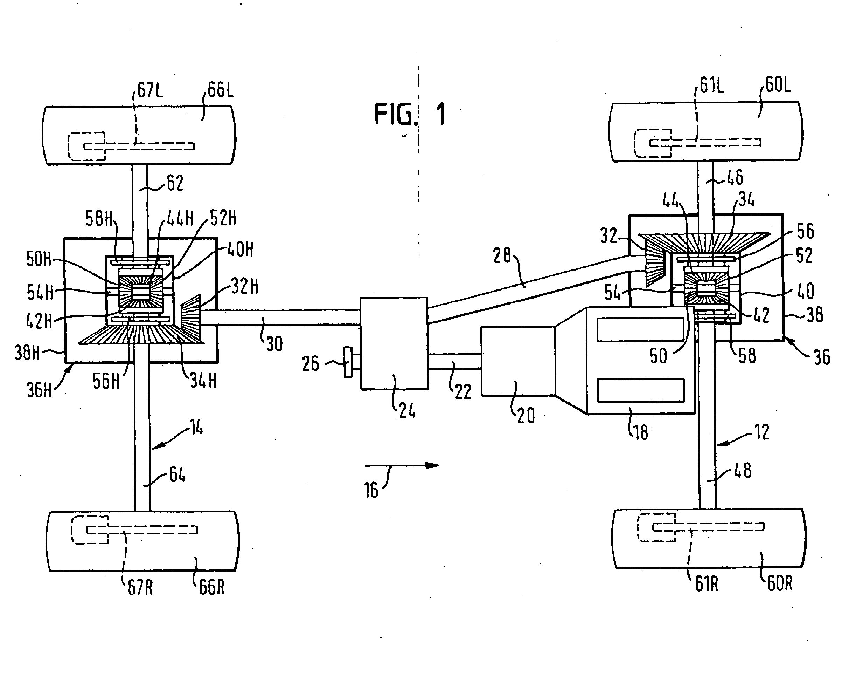

Bezug nehmend auf die Fig. 1 werden zur Erläuterung einer möglichen Auslegung eines Kraftfahrzeugs mit Allradantrieb die wesentlichen Komponenten dieses Allradsystems gezeigt. Danach verfügt das Fahrzeug 10 über eine vordere Achse 12 und eine hintere Achse 14, wobei der Pfeil 16 die normale Fahrtrichtung angibt. Der Motor 18 des Fahrzeugs ist mit einem Getriebe 20 versehen, dessen Ausgangswelle, die eine übliche Kardanwelle 22 sein kann, die Eingangswelle eines so genannten Verteilergetriebes 24 ist. Das Verteilergetriebe weist drei Ausgangswellen 26, 28 und 30 auf.

Die Ausgangswelle 26, die nur wahlweise vorhanden ist, kann verwendet werden, um Hilfseinrichtungen des Fahrzeugs anzutreiben, beispielsweise eine oder mehrere Pumpen, um Drucköl für hydraulisch betätigte Sperrkupplungen zu betätigen oder eine wahlweise vorhandene Winde bei einem Geländefahrzeug.

Die Ausgangswelle 28, die als Kardanwelle vorgesehen ist, treibt das Antriebsritzel 32 und dieses das Tellerrad 34 des Ausgleichsgetriebes 36 der Vorderachse 12 an. Das Ausgleichsgetriebe 36 weist ein Gehäuse 38 auf, in dem das Antriebsritzel 32, das Tellerrad 34 und die üblichen Teile eines Ausgleichsgetriebes untergebracht sind, das hier mit einer selbsttätigen Ausgleichssperre versehen ist. Demnach besteht das Innere des Ausgleichsgetriebes aus einem Ausgleichsgehäuse 40, das vom Tellerrad 34 angetrieben wird und selbst über entsprechende Lager (nicht gezeigt) im Gehäuse 38 drehbar gelagert ist. Innerhalb des Ausgleichsgehäuses befinden sich Antriebskegelräder 42 und 44, die mit jeweiligen Achswellen 46 und 48 der Vorderachse 12 drehfest verbunden sind, sowie so genannte Ausgleichsräder 50 und 52, wobei auch weitere Ausgleichsräder üblicherweise vorgesehen werden, jedoch in der Zeichnung nicht ersichtlich sind. Die Ausgleichsräder sind an Ausgleichsbolzen wie 54 drehbar gelagert.

Im Ausgleichsgehäuse links und rechts der Antriebskegelräder befinden sich Lamellenkupplungen 56, 58, die unter der Einwirkung der Ausgleichsbolzen auf Druckringen (nicht gezeigt) kraftschlüssig in Eingriff gelangen und verhindern, dass die Achswellen 46 und 48 mit deutlich unterschiedlichen Drehzahlen angetrieben werden. Solche Ausgleichsgetriebe mit selbsttätigen Ausgleichssperren sind in vielen Formen und Variationen in der Fachwelt bekannt und müssen hier nicht extra beschrieben werden. Die Achswellen 46 und 48 treiben jeweilige linke und rechte Räder 60L und 60R an sowie die Bremsscheiben 61L und 61R, die innerhalb dieses Räder angeordnet und mit diesen drehfest verbunden sind. D.h. die Bremsscheiben mit den entsprechenden Bremszylindern bilden jeweilige Radbremsen.

Die dritte Ausgangswelle 30 des Verteilergetriebes 24 ist ebenfalls üblicherweise als Kardanwelle ausgeführt und sorgt über das Antriebsritzel 32H und das weitere Ausgangsgetriebe 36H für den Antrieb der hinteren Achse des Fahrzeugs.

Das Ausgleichsgetriebe 36H ist vom Prinzip her identisch mit dem Ausgleichsgetriebe 36 und die entsprechenden Bauteile sind mit entsprechenden Nummern versehen, jedoch nur mit dem Zusatz H, um eine klare Unterscheidung herbeizuführen. Es versteht sich, dass die Funktionsweise des Ausgleichsgetriebes 36H identisch zum Ausgleichsgetriebe 36 ist. Zu der Hinterachse gehören zwei Achswellen 62 und 64, die jeweilige linke und rechte Hinterräder 66L und 66R sowie die entsprechenden Bremsscheiben 67L und 67R antreiben. Die Halbwelle 64 wird vom Antriebskegelrad 42H und die Halbwelle 62 vom Antriebskegelrad 44H angetrieben.

Es soll an dieser Stelle darauf hingewiesen werden, dass die Darstellung gemäß Fig. 1 nur eine von vielen verschiedenen Auslegungen von Kraftfahrzeugen mit mindestens zwei angetriebenen Achsen darstellt. Die vorliegende Erfindung kann mit allen solchen Fahrzeugen verwendet werden, nur gibt es gewisse Fahrzeuge, bei denen die vorgesehenen Sperren nur in eine Drehrichtung bewegt werden dürfen, so dass bei solchen Ausnahmefahrzeugen die Prüfung auf einem Prüfstand mit zwei in entgegengesetzten Bewegungsrichtungen laufenden Antriebseinrichtungen nicht zulässig ist. Solche Ausnahmefahrzeuge müssen dann gegebenenfalls nach der zweiten Variante der Erfindung bei der eine jeweilige Antriebseinrichtung für jedes Rad der angetriebenen Achsen vorgesehen wird.

Wesentlich ist, dass zwischen den angetriebenen Achsen stets ein starres oder quasi-starres Antriebssystem vorliegt. Beim vorliegenden Beispiel gemäß Fig. 1 wird dieses Antriebssystem durch das Verteilergetriebe 24 sowie die beiden Antriebswellen 28 und 30 gebildet. Selbst wenn, wie ebenfalls bekannt ist, eine Viskosekupplung oder eine Kupplung mit beschränktem Schlupf oder ein Ausgleichsgetriebe in diesem Antriebssystem vorgesehen ist, gilt das System insgesamt als quasi-starres Antriebssystem.

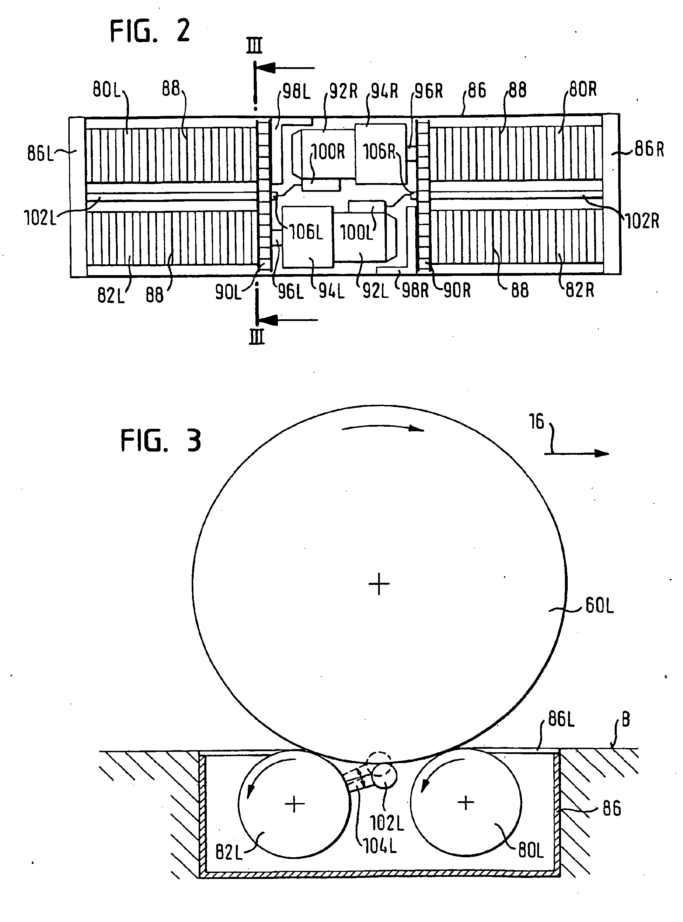

Ein Beispiel eines Prüfstandes mit zwei Rollenpaaren wird nunmehr anhand der Figuren 2 und 3 beschrieben.

Im Prüfstand gemäß Fig. 2 sind zwei Rollenpaare 80R und 82R auf der rechten Seite und 80L und 82L auf der linken Seite vorgesehen, die voneinander vollkommen unabhängig sind. Die beiden Rollenpaare sind in einem quaderförmigen Kasten bzw. Gehäuse 86 untergebracht, wobei das Gehäuse 86 an ihrer oberen Seite im Bereich der Profilwalzenpaare 80R, 82R bzw. 80L, 82L offen ist, jedoch im mittleren Bereich zwischen diesen Rollenpaaren normalerweise mit einem Deckel verschlossen ist (der hier der Darstellung halber fortgelassen ist). Auch sind Deckel häufig vorgesehen, um die Rollenpaare 80R, 82R bzw. 80L, 82L abzudecken, wenn diese nicht für Bremsprüfungen benötigt werden.

An ihrem rechten Ende sind die Rollen 80R und 82R in Lagern abgestützt, die im entsprechenden rechten Ende des Gehäuses 86 untergebracht sind.

Auf der linken Seite sind die entsprechenden Rollen 80L und 82L ebenfalls in Lagern drehbar gelagert. Die Lager auf der rechten Seite des Rollenpaars 80R, 82R und auf der linken Seite der Rollen 80L, 82L sind in der Zeichnung gemäß Fig. 2 nicht ersichtlich, da sie von dem Gehäuseteil 86R und 86L abgedeckt sind.

Wie aus Fig. 3 ersichtlich, sind die Oberflächen der Rollenpaare, hier am Beispiel der Rollenpaare 80L und 82L gezeigt, mit ihren oberen Bereichen flächenbündig mit den Gehäuseteilen 86L bzw. 86R (in Fig. 3 nicht gezeigt) und ebenfalls flächenbündig mit dem Werkstattboden B, in den das Gehäuse 86 eingelassen ist.

Die Oberflächen der Rollenpaare 80R, 82R bzw. 80L und 82L sind mit Aufrauungen, beispielsweise in Form von unregelmäßigen Schweißraupen 88 versehen, um die erforderliche Griffigkeit zwischen den Rollen und dem zu prüfenden Fahrzeugrad sicherzustellen, das schematisch in Fig. 3 mit 60L angedeutet ist.

Die Rollen 80R, 82R bzw. 80L und 82L der beiden Rollenpaare sind an ihren Enden, die benachbart zur Mitte des Gehäuses 86 liegen, jeweils mit einer umlaufenden Kette 90R bzw. 90L drehfest miteinander verbunden. Das rechte Rollenpaar 80R, 82R wird von einem Elektromotor 92L mit Getriebe 94L, d.h. einem Getriebemotor, angetrieben, wobei die Antriebswelle 96L, die die Rolle 80R direkt antreibt, auch für die Lagerung der linken Seite der Rolle 80R sorgt, d.h. die Lagerung der Welle 96L im Getriebe 94L sorgt für die notwendige Lagerung des linken Endes der Rolle 80R. Für das linke Ende der Rolle 82R wird ein getrenntes Lager 98R vorgesehen, das am Gehäuse 86 bzw. am Gehäuserahmen abgestützt ist. Es handelt sich bei dem Elektromotor 92L um einen Elektromotor mit variabler Antriebsgeschwindigkeit, die von einem Elektronikbauteil 100R gesteuert wird. Die Antriebsanordnung für das linke Rollenpaar 80L, 82L ist identisch zum Antriebssystem für das rechte Rollenpaar 80R, 82R aufgebaut, weshalb die entsprechenden Teile mit den gleichen Bezugszeichen versehen werden, jedoch mit dem Zusatz L anstatt von R. Es versteht sich, dass die bisherige Beschreibung auch für diese Teile gilt.

Zwischen jedem Rollenpaar 80R, 82R und 80L, 82L befindet sich eine Steuerstange 102R bzw. 102L, die dafür sorgt, dass die Antriebsmotoren 92R bzw. 92L erst dann Strom erhalten und die Rollen in Drehung versetzen können, wenn ein Rad wie 60L in Fig. 3 auf die beiden Rollen gefahren ist und die jeweilige Steuerstange 102L in Fig. 3, die über einen schwenkbaren Hebel 104L montiert ist, von der oberen Position in gebrochenen Linien dargestellt, in die nach unten gedrückte Position, die in durchgehenden Linien gezeichnet ist, gedrückt wird. In dieser niedergedrückten Stellung betätigt die jeweilige Steuerstange, in diesem Fall 102L, einen Endschalter 104L (bzw. 104R), die ein entsprechendes Signal an die jeweilige Steuerung 100R bzw. 100L gibt.

Die Drehrichtungen der Rollen 80L bzw. 82L, die erforderlich sind, um das linke Vorderrad 60L in Fahrtrichtung zu drehen, sind durch jeweilige Pfeile dargestellt.

Die Bauteile 80R, 82R, 92R, 94R, 96R, 102R, 100R, 106R bilden eine erste Antriebseinrichtung, die beispielsweise dem rechten Vorderrad 60R zugeordnet werden kann. In der gleichen Weise bilden die Bauteile 80L, 82L, 92L, 94L, 96L, 102L, 100L, 106L eine Antriebseinrichtung für beispielsweise das linke Vorderrad 60L.

Jede Antriebseinrichtung ist ausgelegt, damit der entsprechende Motor 92R bzw. 92L das entsprechende Rollenpaar 80R, 82R bzw. 80L, 82L mit einer erwünschten Geschwindigkeit antreiben kann, und diese erwünschte Geschwindigkeit kann über eine externe Steuerleitung, beispielsweise von einer übergeordneten Computersteuerung, vorgegeben werden. In üblicher Weise liegt diese erwünschte Geschwindigkeit im Bereich zwischen 3 und 7 m/s Oberflächengeschwindigkeit der entsprechenden Rollen.

Dies ist auch der Zustand bei einem herkömmlichen Bremsenprüfstand beispielsweise beim Bremsenprüfstand BPS Kompakt, 0-13.0 der vorliegenden Anmelderin.

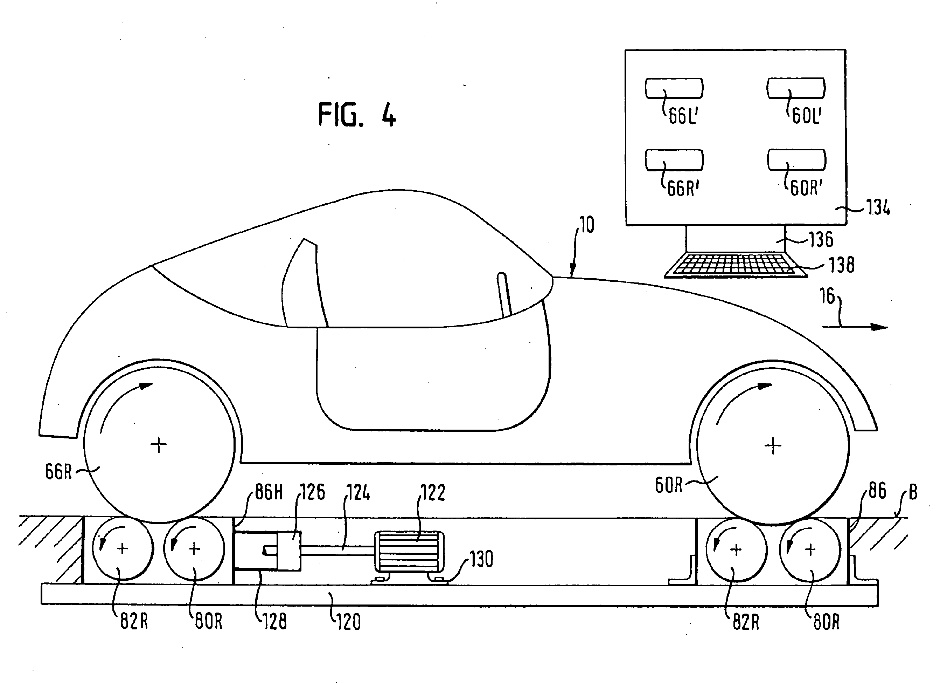

Zu diesen Antriebseinrichtungen gehören auch die Kraftaufnehmer, die die Reaktionskraft zwischen dem Motor 92R bzw. 92L und dem Gehäuse 86 des Bremsenprüfstands aufnehmen. Die Höhe dieser Reaktionskraft hängt vom Rollwiderstand der jeweiligen Räder sowie der/dem durch die Bremsen auf die jeweiligen Räder ausgeübten Bremskraft bzw. -moment ab. Da der Eingangswert bei gelöster Bremse und dem entsprechenden Wert bei betätigter Bremse ermittelt werden, kann der Anteil der Reaktionskraft die auf die Wirkung der Bremsen zurückzuführen ist, durch den Unterschied der beiden Werte ermittelt werden. So funktioniert auch der Bremsenprüfstand, wenn die Prüfung an einem herkömmlichen Fahrzeug durchgeführt wird, das mit nur einer angetriebenen Achse versehen ist, d.h. ohne Allradantrieb. In diesem Falle ist aber die erwünschte Geschwindigkeit für beide Räder gleich. Bei einem solchen Fahrzeug hat ein etwaiges Ausgleichsgetriebe mit Sperrwirkung, das sich in der Achse zwischen den beiden Rädern befindet, bei Betätigung der Bremsen keine Auswirkung auf die gemessenen Bremskräfte. Selbst wenn die Räder aus irgendeinem Grund unterschiedliche Rollumfänge haben sollten, reicht dies normalerweise nicht aus, um eine so unterschiedliche Drehgeschwindigkeit der linken und rechten Räder herbeizuführen, dass die Sperrkupplung eingreift. Bei einem Fahrzeug mit mehreren angetriebenen Achsen, die miteinander aber ein Antriebssystem starr oder quasi-starr gekoppelt sind, ist dies aber nicht aber nicht der Fall und die Steuerungen 100R und 100L bzw. die von einem übergeordneten Computer (136, Fig. 4) vorgegebenen Steuerparameter werden anders ausgelegt, um eine Verfälschung der Messwerte aufgrund der mechanischen Kopplung der Räder der zwei oder mehr angetriebenen Achsen zu verhindern.

Die Fig. 4 zeigt ein Allradfahrzeug 10, dessen rechte Räder 60R bzw. 66R auf jeweilige Rollenpaare 80R, 82R stehen, wobei die linken Räder, die hier nicht gezeigt sind, ebenfalls auf entsprechenden Rollenpaare 80L und 82L stehen. Es sind somit in diesem Beispiel vier Rollenpaare vorgesehen, die jeweils Teil einer jeweiligen Antriebseinrichtung sind, wobei die Antriebseinrichtungen genauso ausgelegt sind, wie im Zusammenhang mit der Fig. 2 und 3 beschrieben. Auch hier sind die beiden Rollenpaare im Boden der Werkstatt eingebaut bzw. eingelassen wobei aber das vordere Rollenpaar im Gehäuse 86H im Boden fest verankert ist, während das hintere Rollenpaar im eigenen Gehäuse 86 über Schienen wie 120 in Längsrichtung des Fahrzeugs durch einen E-Motor 122 und eine Spindel und Spindelmutteranordnung 124 bzw. 126 in Längsrichtung der Schiene 120 verstellbar ist, da die Spindelmutter 126 mit dem Gehäuse 86 über die Streben 128 gekoppelt ist. Dabei ist das Gehäuse des Elektromotors 122 bei 130 an den Schienen 120 fest verankert. Diese Verstellbarkeit der hinteren Rollenpaare ermöglicht eine Anpassung der Rollen an den jeweiligen Radstand der geprüften Fahrzeuge. Wenn, wie hier, Rollenpaare für jedes Rad der angetriebenen Achsen vorgesehen sind, werden die Rollenpaare stets in der gleichen Drehrichtung angetrieben, wie durch die einzelnen Pfeile gezeigt, so dass die Räder des Fahrzeugs sich entsprechend der normalen Fahrtrichtung 16 bewegen. Das Bezugszeichen 134 deutet auf eine Anzeigetafel, wo die einzelnen gemessenen Bremswerte unter Steuerung durch den Mikrocomputer 136 angezeigt werden. Das Bezugszeichen 138 deutet auf eine Tastatur, die es ermöglicht, Angaben in den Computer 136 einzuspeisen, wie beispielsweise das Datum der Prüfung, die Art des geprüften Fahrzeugs, das amtliche Kennzeichen des geprüften Fahrzeugs, der jeweilige Halter, usw. Der Computer 136 ist in üblicher Weise auch programmiert, Prüfprotokolle auszudrucken, die das Ergebnis der durchgeführten Bremsprüfung festhält. Die einzelnen gemessenen Bremswerte können digital und in Abbildungen 60L', 60R', 66L' 66R'der vier Räder 60L, 60R, 66L, 66R des Fahrzeugs dargestellt werden oder auf irgendeine andere geeignete Weise.

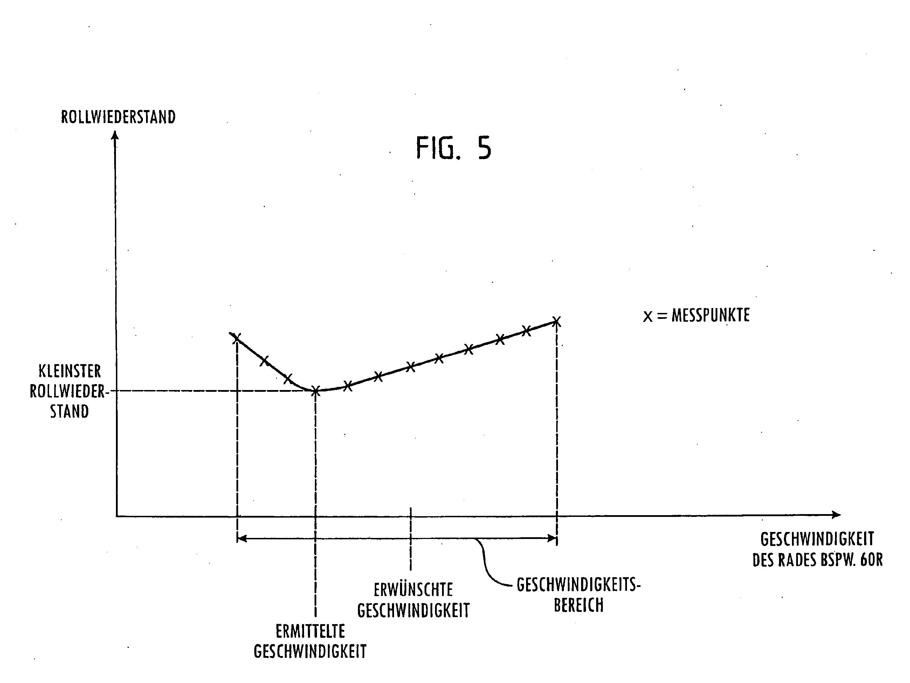

Es wird jetzt in Form eines Flussschemas und mit Hinweis auf die Fig. 5 beschrieben, wie die Bremsprüfung bei dem Bremsenprüfstand gemäß Fig. 2 und bei dem Bremsprüfstand gemäß Fig. 4 ablaufen kann.

### I. BREMSPRÜFUNG MIT PRÜSTAND GEMÄSS FIG. 2 und 3

A. Antriebsmotor 92L starten, um das linke Vorderrad 60L in normale Fahrtrichtung 16 bei der erwünschten Geschwindigkeit zu drehen und auf diese Geschwindigkeit als Sollwert zu regeln.
B. Gleichzeitig mit Schritt A Antriebsmotor 92R starten, um das rechte Vorderrad 60R bei der erwünschten Geschwindigkeit aber entgegengesetzt zur normalen Fahrtrichtung zu drehen.
C. Antriebsmotor 92R ansteuern, um das rechte Vorderrad mit verschiedenen Geschwindigkeiten in einem vorgegebenen Bereich anzutreiben, der üblicherweise die erwünschte Geschwindigkeit umfasst.
D. Der Rollwiderstand des rechten Rades 60R bei den verschiedenen Geschwindigkeiten ermitteln, um entweder eine Kurve gemäß Fig. 5 oder entsprechende Tabellenwerte zu bilden.
E. Automatische Ermittlung der Geschwindigkeit des rechten Rads 60R, bei der der Rollwiderstand am kleinsten ist.
F. Antriebsmotor 90R bei der ermittelten Geschwindigkeit, bei der der Rollwiderstand am kleinsten ist antreiben und auf diese ermittelte Geschwindigkeit als Sollwert zu regeln.
G. Bremsen betätigen und die Bremswerte am linken Rad 60L und am rechten Rad 60R messen und anzeigen.
H. Bei zufrieden stellenden Bremswerten Bremsprüfung der Vorderachse beenden oder
I. Bei unzufrieden stellenden Bremswerten Bremsprüfung abbrechen und Prüflauf fortsetzen und Bremsprüfung an der Vorderachse wiederholen, entweder dadurch,
J. dass die Bremsprüfung bei Stufe A neu angefangen wird oder dadurch
K. dass die Bremsprüfung bei Stufe G erneut durchgeführt wird.
L. Wenn die Bremsprüfung für die Vorderachse erfolgreich oder nicht erfolgreich ist, Fahrzeug verschieben und zweite Achse prüfen und die Schritte A bis J für die Räder 66L und 66R der zweiten Achse durchführen.
M. Wenn Bremswerte bei allen vier Bremsen zufrieden stellend sind, positives Messprotokoll ausdrucken oder
N. Wenn Bremswerte bei mindestens einer der vier Bremsen nicht zufrieden stellend sind, Fehlerprotokoll ausdrucken.

Es sind selbstverständlich mehrere Variationen bei diesem Verfahren möglich.

Es ist nicht zwingend erforderlich, das linke Vorderrad bei der erwünschten Geschwindigkeit anzutreiben, man könnte umgekehrt das rechte Vorderrad bei der erwünschten Geschwindigkeit antreiben und erst den Rollwiderstand am linken Vorderrad messen.

Es ist auch nicht zwingend erforderlich, die Vorderachse vor der Hinterachse zu prüfen.

Sollten mehr als zwei angetriebene Achsen vorhanden sein, können diese der Reihe nach entsprechend dem oben angegebenen Schema geprüft werden.

Es ist auch nicht zwingend erforderlich, im Schritt B das entsprechende Rad bei der erwünschten Geschwindigkeit erst einzustellen, sondern man könnte an der unteren oder oberen Geschwindigkeit des vorgesehenen Geschwindigkeitsbereichs anfangen und von hier an die Rollwiderstandswerte für verschiedene Geschwindigkeiten des Geschwindigkeitsbereichs ermitteln.

Man könnte auch diese Ermittlung abbrechen, wenn festgestellt wird, dass der Rollwiderstand auf ein Minimum sinkt und dann wieder ansteigt und nur die Geschwindigkeit, bei der der Rollwiderstand am kleinsten ist, wird für die weitere Prüfung als die ermittelte Geschwindigkeit genommen.

Die Ermittlung des niedrigsten Rollwiderstands kann nach vielen verschiedenen Verfahren erfolgen. Eine Möglichkeit besteht darin, die Kurve gemäß Fig. 5 zu differenzieren und mit dem Wert Null zu vergleichen. Ist der Gradient der Kurve gleich Null, so liegt der niedrigste Rollwiderstand vor. Alternativ hierzu kann geprüft werden, ob der Gradient von einem negativen Wert über Null zu einem positiven Wert sich verändert, weil nur beim Umkehrpunkt ein Minimum vorliegt.

Es ist auch denkbar, dass der Prüfer nur die Bremswerte berücksichtigen möchte, die bei Drehung der entsprechenden Räder in die normale Fahrtrichtung ermittelt werden. Sollte dies der Fall sein, muss die Bremsprüfung wiederholt werden, in dem nicht das linke Vorderrad bei der erwünschten Geschwindigkeit angetrieben wird, sondern das rechte Vorderrad und es kann dann der kleinste Rollwiderstand bei dem linken Rad ermittelt werden. Da aber die Bremswerte der zwei vorderen Räder nur dann miteinander verglichen werden können, wenn sie bei gleichem Bremsdruck entstehen, so muss zusätzlich eine Bremsdruckmesseinrichtung vorgesehen werden. Dies kann beispielsweise durch einen Kraftsensor erreicht werden, der die Kraft misst, die auf das Bremspedal ausgeübt wird. Es könnte aber auch eine direkte oder indirekte Messung des Druckes erfolgen, der in der Bremsleitung herrscht. D.h. nur diejenigen Bremswerte werden für das Messprotokoll herangezogen, die bei dem gleichen Bremsdruck entstehen. Für den Fall, dass das Fahrzeug mit einer elektrischen Bremse ausgestattet wird, kann durch Überwachung der Größe des elektrischen Befehlsignals sichergestellt werden, dass die gleiche Eingangsgröße für die Ermittlung der jeweiligen Bremswerte herangezogen wird.

### II. BREMSPRUFUNG MIT PRÜFSTAND GEMÄß FIG. 2, 3 UND 4

Ein alternatives Verfahren zur Prüfung der Bremswirkung unter Anwendung des Prüfstands gemäß Fig. 4 wird nunmehr ebenfalls beschrieben. Dieses Alternativverfahren umfasst folgende Schritte:
A. Die Antriebsmotoren 92L und 92R, die den Rädern 60L und 60R der Vorderachse zugeordnet werden, werden gestartet und angesteuert, um die beiden Vorderräder 60L und 60R auf die erwünschte Geschwindigkeit zu bringen und auf diese Geschwindigkeit als Sollwert zu regeln.
B. Gleichzeitig werden die Antriebsmotoren, die den angetriebenen Rädern 66L und 66R der Hinterachse zugeordnet sind, gestartet, um auch diese Räder bei einer Geschwindigkeit anzutreiben, die der erwünschten Geschwindigkeit entspricht. Alle Räder werden in die normale Fahrtrichtung gedreht.
C. Die Antriebsmotoren, die die Räder der Hinterachse antreiben, werden dann gemeinsam angesteuert, um die Geschwindigkeit der hinteren Räder mit verschiedenen Geschwindigkeiten, die aber für beide Räder gleich sind, in einem vorgegebenen Geschwindigkeitsbereich anzutreiben, der üblicherweise die erwünschte Geschwindigkeit umfasst.
D. Bei gelösten Bremsen wird dann ermittelt, bei welcher Geschwindigkeit der Räder der hinteren Achse die Summe der Rollwiderstände der beiden Räder am kleinsten ist.
E. Die Räder der Hinterachse 14 werden dann bei dieser ermittelten Geschwindigkeit gedreht.
F. Das linke Rad 60L der Vorderachse 12 wird dann mit der erwünschten Geschwindigkeit mittels des diesem zugeordneten Antriebsmotor 92L gedreht. Die Drehgeschwindigkeit des rechten Vorderrads, das weiterhin in die normale Fahrtrichtung dreht, wird dann bei verschiedenen Geschwindigkeiten in einem vorgegebenen Geschwindigkeitsbereich angetrieben, der üblicherweise die erwünschte Geschwindigkeit umfasst.
G. Der Rollwiderstand des rechten Rads 60R wird bei den verschiedenen Geschwindigkeiten ermittelt, um eine Kurve gemäß Fig. 5 oder entsprechende Tabellenwerte zu bilden.
H. Es wird dann die Geschwindigkeit des rechten Vorderrads 60R ermittelt, bei der der Rollwiderstand am kleinsten ist.
I. Das rechte Vorderrad wird dann für die weitere Prüfung vom jeweiligen Antriebsmotor 92R bei dieser Geschwindigkeit angetrieben, bei der der kleinste Rollwiderstand ermittelt wurde.
J. Das linke Hinterrad 66L wird anschließend bei der für die Hinterachse im Schritt D ermittelte Geschwindigkeit angetrieben und das rechte Hinterrad 66R wird vom entsprechenden Antriebsmotor in seiner Geschwindigkeit in einem Geschwindigkeitsbereich variiert, der üblicherweise die erwünschte Geschwindigkeit oder die für die Hinterachse im Schritt D ermittelte Geschwindigkeit umfasst.
K. Der Rollwiderstand des rechten Hinterrades 66R wird bei den unterschiedlichen Geschwindigkeiten ermittelt, um ebenfalls eine Kurve gemäß Fig. 5 oder entsprechende Tabellenwerte zu bilden.
L. Danach wird die Geschwindigkeit des rechten Hinterrades 66R automatisch ermittelt, bei der der gemessene Rollwiderstand am kleinsten ist.
M. Der diesem rechten Hinterrad zugeordnete Antriebsmotor wird dann angesteuert, um diese ermittelte Geschwindigkeit, bei der der kleinste Rollwiderstand ermittelt wurde, bei dem Hinterrad 66R vorzusehen und auf diese ermittelte Geschwindigkeit als Sollwert zu regeln.
N. Die Bremsen werden jetzt betätigt und Bremswerte an den linken und rechten Vorderrädern 60L, 60R und an den linken und rechten Hinterrädern 66L und 66R gemessen und angezeigt.
O. Bei zufrieden stellenden Bremswerten wird die Bremsprüfung beendet und ein positives Bremsprotokoll ausgedruckt.
P. Bei nicht zufrieden stellenden Bremswerten wird der Prüflauf fortgesetzt und die Bremsprüfung wiederholt, und zwar entweder
Q. bei Stufe A oben oder bei
R. bei Stufe N
S. Wird diese erneute Bremsprüfung erfolgreich durchgeführt in dem Sinne, dass zufrieden stellende Bremswerte an allen vier Rädern erreicht werden, wird der Prüflauf beendet und ein positives Bremsprüfprotokoll ausgedruckt.
T. Wenn aber nicht zufrieden stellende Bremswerte bei einer Bremse oder bei mehreren Bremsen festgestellt werden, so wird ein Fehlerprotokoll ausgedruckt.

Auch bei diesem Verfahren sind verschiedene Varianten möglich - analog zum erst genannten Verfahren. Beispielsweise könnten die Räder der Hinterachse bei der erwünschten Geschwindigkeit zunächst angetrieben und die Geschwindigkeit für die beiden Vorderräder ermittelt werden, bei der der niedrigste Rollwiderstand vorliegt.

Bei Stufe F oben könnte anstelle des linken Vorderrades bei der erwünschten Geschwindigkeit anzutreiben, das rechte Vorderrad bei der erwünschten Geschwindigkeit angetrieben werden und die Geschwindigkeit für das linke Vorderrad ermittelt werden, bei der der geringste Rollwiderstand vorliegt.

Es könnte auch entsprechend bei den Rädern der Hinterachse verfahren werden.

Anstatt nur zwei Bremsprüfungen in einem Prüflauf vorzunehmen, wenn bei der ersten Bremsprüfung nicht zufrieden stellende Bremswerte festgestellt werden, könnten mehrere Bremsprüfungen im gleichen Prüflauf durchgeführt werden.

Egal, ob es sich bei dem Prüfstand um einen Prüfstand mit zwei Rollensätzen entsprechend der Fig. 2 oder einen Prüfstand mit vier Rollensätzen entsprechend der Fig. 4 handelt, kann in beiden Fällen ermittelt werden, ob es sich bei dem geprüften Fahrzeug um ein Fahrzeug mit mehr als einer angetriebenen Achse handelt, bei dem die Achsen mittels eines starren oder quasi starren Antriebssystems miteinander gekoppelt sind.

Um diese automatische Erkennung durchzuführen, wird einer der Antriebsmotoren angesteuert, um eines der Räder in eine Drehrichtung zu drehen, und es wird bei den anderen Rädern anhand der Messwerte an den jeweiligen Rollensätzen geprüft, ob das entsprechende Rad eine kleine Ruckbewegung in der entgegengesetzten Richtung macht. Diese Messung, die mittels des ohnehin vorhandenen Messsystems durchgeführt werden kann, zeigt zuverlässig, ob es sich um ein allradgetriebenes Fahrzeug handelt. Liegt solch eine kleine Ruckbewegung an einem Rad vor, ist dies sicherlich der Fall. Liegt dagegen keine Ruckbewegung bei einem der weiteren Räder vor, wird automatisch erkannt, dass es sich um ein Kraftfahrzeug handelt, bei dem keine Kopplung von angetriebenen Achsen vorliegt, so dass das Fahrzeug wie ein herkömmliches Fahrzeug mit Zweiradantrieb geprüft werden kann.

Sollte aber die kleine Ruckbewegung auftreten, muss die Prüfung entsprechend einer der oben beschriebenen Prüfverfahren durchgeführt werden oder aber nach einem anderen an sich bekannten Prüfverfahren.

Unter Umständen ist es möglich bei einem Prüfstand mit zwei Antriebseinrichtungen nur die eine mit einem ansteuerbaren Antriebsmotor auszustatten. Der zweite Antriebsmotor könnte mit einer fest vorgegeben Geschwindigkeit laufen, so dass die relative teuere Ansteuerung bei einem Antriebsmotor entfällt. Die nicht angesteuerte Antriebsmotor würde dann bei der Bremsprüfung etwas langsamer, eine Fehlmessung könnte jedoch, sofern eine solche zu befurchten ist, durch die Ansteuerung des zweiten Antriebsmotors kompensiert werden, in dem Sinne, dass das Verhältnis der Winkelgeschwindigkeiten vor der Betätigung der Bremsen - die ja aufgrund der Erfindung ermittelt und daher bekannt ist - auch während der Betätigung der Bremsen durch gezieltes Ansteuern des ansteuerbaren Antriebsmotors beibehalten wird.

Bei einem Prüfstand mit zwei Paaren von Antriebseinrichtungen (bspw. ein Paar für jede Achse) könnte dementsprechend von jedem Paar nur der eine Antriebsmotor ansteuerbar sein, der zweite aber bei einer fest vorgegebener Geschwindigkeit laufen.

## Patentansprüche

1. Verfahren zur Prüfung der Bremswirkung der einzelnen Bremsen (61 L, 61 R, 67L, 67R) eines Kraftfahrzeugs (10) mit mindestens zwei angetriebenen Achsen (12, 14), wobei die Räder (60L, 60R, 66L, 66R) jeder angetriebenen Achse (12, 14) miteinander über ein Ausgleichsgetriebe (36) und die angetriebenen Achsen (12, 14) untereinander mit einem starren oder quasi-starren Antriebssystem (24, 28, 30), wie beispielsweise ein Antriebssystem mit beschränktem Schlupf, gekoppelt sind, wobei die Bremsprüfung für die linke und rechte Bremse (61 L, 61 R) einer der Achsen (12) durchgeführt wird, während die Räder (66L, 66R) der anderen Achse (14) stillstehen und die linken und rechten Räder (60L, 60R) der geprüften Achse in unterschiedliche Drehrichtungen durch jeweilige Antriebseinrichtungen (80L, 82L, 92L, 94L, 96L; 80R, 82R, 92R, 94R, 96R) eines Prüfstands gedreht werden, von denen mindestens eine einen getrennt ansteuerbaren Antriebsmotor (92L, 92R) aufweist bzw. von denen jede einen jeweiligen getrennt ansteuerbaren Antriebsmotor aufweist und die ausgelegt sind, um die/das von den Rädern übertragene Bremskraft bzw. -moment bei einer erwünschten Geschwindigkeit zu ermitteln, **dadurch gekennzeichnet, dass**:
a) der Antriebsmotor (92L) eines der linken und rechten Räder (60L, 60R) das entsprechende Rad (60L) auf die erwünschte Geschwindigkeit bringt,
b) der Antriebsmotor (92R) des jeweils anderen Rades (60R), dieses bei gelösten Bremsen (61L, 61R, 67L, 67R) über einen Geschwindigkeitsbereich antreibt, der üblicherweise die erwünschte Geschwindigkeit umfasst, um die jeweilige Geschwindigkeit zu ermitteln, bei der der kleinste Rollwiderstand vorliegt und
c) die Antriebsmotoren (92L, 92R) mindestens für die unmittelbar anschließende Bremsprüfung bei den entsprechenden Geschwindigkeiten angetrieben werden, für die der kleinste Rollwiderstand ermittelt wurde.

2. Verfahren nach Anspruch 1,
**dadurch gekennzeichnet,**
**dass** die jeweilige Geschwindigkeit, bei der der kleinste Rollwiderstand vorliegt, für weitere Bremsprüfungen der jeweiligen Achse jeweils neu ermittelt wird bzw. dass die entsprechenden Geschwindigkeiten für weitere Bremsprüfungen der jeweiligen Achse beim jeweiligen Prüflauf beibehalten werden.

3. Verfahren nach Anspruch 2,
**dadurch gekennzeichnet,**
**dass** die Rollwiderstandsermittlung jeweils nach dem Lösen der Bremsen (61L, 61R, 67L, 67R) automatisch neu erfolgt und, wenn erforderlich, die geänderte Geschwindigkeit, bei der der Rollwiderstand am kleinsten ist, für die nächste Bremsprüfung des gleichen Prüflaufs verwendet wird.

4. Verfahren nach einem der vorhergehenden Ansprüche,
**dadurch gekennzeichnet,**
**dass** bei der Prüfung der Bremse (61L) auf der einen Seite des Fahrzeugs, bei der das Rad (60L) in die normale Fahrtrichtung (16) dreht, die auf das Bremspedal einwirkende Kraft oder ein entsprechender Wert, wie beispielsweise der Bremsleitungsdruck, ermittelt wird, die Drehrichtung der linken und rechten Räder (60L, 60R) geändert wird und die Bremsprüfung bei der gleichen Kraft bzw. bei dem gleichen dieser entsprechenden Wert wiederholt wird und nur die Bremswerte für die in die Fahrtrichtung laufenden Räder oder ein Mittelwert der Bremswerte aus den beiden Bremsprüfungen für das Prüfergebnis berücksichtigt wird.

5. Verfahren nach einem der vorhergehenden Ansprüche,
**dadurch gekennzeichnet,**
**dass** nach der Prüfung der Bremsen (61 L, 61 R) der einen Achse (12) die Prüfung der Bremsen (67L, 67R) der zweiten Achse (14) entsprechend erfolgt, während die Räder (60L, 60R) der ersten Achse stillstehen.

6. Verfahren zur Prüfung der Bremswirkung der einzelnen Bremsen (61 L, 61 R, 67L, 67R) eines Kraftfahrzeugs (10) mit mindestens zwei angetriebenen Achsen (12, 14), wobei die Räder (60L, 60R, 66L, 66R) jeder angetriebenen Achse miteinander über ein Ausgleichsgetriebe (36) und die angetriebenen Achsen (12, 14) untereinander mit einem starren oder quasi-starren Antriebssystem (24, 28, 30), wie beispielsweise ein Antriebssystem mit beschränktem Schlupf, gekoppelt sind, wobei die Bremsprüfung für die linken und rechten Bremsen (61 L, 61 R, 67L, 67R) der gekoppelten Achsen (12, 14) durchgeführt wird, während die entsprechenden Räder (60L, 60R, 66L, 66R) durch jeweilige Antriebseinrichtungen (80L, 82L, 92L, 94L, 96L; 80R, 82R, 92R, 94R, 96R) eines Prüfstands (Fig. 4) in die gleiche Richtung gedreht werden, die jeweilige getrennt ansteuerbare Antriebsmotoren (92L, 92R) aufweisen und ausgelegt sind, um die/das von den Rädern übertragene Bremskraft bzw. -moment bei einer erwünschten Geschwindigkeit zu ermitteln, **dadurch gekennzeichnet, dass**:
a) die der einen Achse (12) zugeordneten Antriebseinrichtungen (80L, 82L, 92L, 94L, 96L; 80R, 82R, 92R, 94R, 96R), d.h. die diesen zugeordneten Antriebsmotoren (92L, 92R), angesteuert werden, um die Räder (60L, 60R) dieser Achse (12) auf die erwünschte Geschwindigkeit zu bringen,
b) die der zweiten Achse (14) zugeordneten Antriebseinrichtungen (80L, 82L, 92L, 94L, 96L; 80R, 82R, 92R, 94R, 96R), d.h. die dieser zugeordneten Antriebsmotoren (92L, 92R) bei gelösten Bremsen, angesteuert werden, um die Räder (66L, 66R) dieser Achse (14) gemeinsam über einen Geschwindigkeitsbereich anzutreiben, der üblicherweise die erwünschte Geschwindigkeit umfasst, um die Geschwindigkeit dieser Räder (66L, 66R) zu ermitteln, bei der der kleinste Rollwiderstand vorliegt,
c) für jede Achse (12, 14) die Antriebseinrichtung für eines der Räder (60L, 66L) vom jeweiligen Antriebsmotor bei gelösten Bremsen (61 L, 61 R, 67L, 67R) bei der erwünschten Geschwindigkeit bzw. bei der ermittelten Geschwindigkeit angetrieben wird und das jeweils andere Rad (60R, 66R) durch die jeweilige Antriebseinrichtung über einen Geschwindigkeitsbereich angetrieben wird, der üblicherweise die erwünschte Geschwindigkeit bzw. die ermittelte Geschwindigkeit umfasst, um die jeweilige Geschwindigkeit zu ermitteln, bei der der kleinste Rollwiderstand vorliegt,
d) die Antriebsmotoren (92L, 92R) mindestens für die unmittelbar anschließende Bremsprüfung bei den entsprechenden Geschwindigkeiten angetrieben werden, für die die kleinsten Rollwiderstände ermittelt wurden.

7. Verfahren nach Anspruch 6,
**dadurch gekennzeichnet,**
**dass** die jeweiligen Geschwindigkeiten, bei denen die kleinsten Rollwiderstände vorliegen, für weitere Bremsprüfungen der jeweiligen Achse beim jeweiligen Prüflauf jeweils neu ermittelt werden bzw. dass die entsprechenden Geschwindigkeiten für weitere Bremsprüfungen beibehalten werden.

8. Verfahren nach Anspruch 7,
**dadurch gekennzeichnet,**
**dass** die Rollwiderstandsermittlung jeweils nach dem Lösen der Bremsen (61 L, 61 R, 67L, 67R) automatisch neu erfolgt und, wenn erforderlich, die geänderten Geschwindigkeiten, bei denen die Rollwiderstände am kleinsten sind, für die nächste Bremsprüfung des gleichen Prüflaufs verwendet wird.

9. Verfahren nach einem der vorhergehenden Ansprüche 6 bis 8,
**dadurch gekennzeichnet,**
**dass** vor der Durchführung der Prüfung der relative Abstand der Antriebseinrichtungen in Längsrichtung des Kraftfahrzeugs an den jeweiligen Radstand des Kraftfahrzeugs angepasst wird.

10. Verfahren nach einem der vorhergehenden Ansprüche und zur automatischen Ermittlung, ob es sich bei dem Kraftfahrzeug (10), an dem die Bremsprüfung vorgenommen wird, um ein Kraftfahrzeug mit mindestens zwei angetriebenen Achsen (12, 14) handelt,
**dadurch gekennzeichnet,**
**dass** zunächst der Antriebsmotor (92L) einer der Antriebseinrichtungen (80L, 82L, 92L, 94L, 96L; 80R, 82R, 92R, 94R, 96R) gestartet wird und bei der anderen Antriebseinrichtung (80L, 82L, 92L, 94L, 96L; 80R, 82R, 92R, 94R, 96R) oder bei mindestens einer der weiteren Antriebseinrichtungen (80L, 82L, 92L, 94L, 96L; 80R, 82R, 92R, 94R, 96R) ermittelt wird, ob das dieser jeweils zugeordnete Rad (60R) in die entgegengesetzte Drehrichtung zu drehen versucht.

11. Verfahren nach Anspruch 10
**dadurch gekennzeichnet,**
**dass**, wenn das der weiteren Antriebseinrichtung zugeordnete Rad (60R) nicht versucht, sich in die entgegengesetzte Drehrichtung zu drehen, das Kraftfahrzeug als Kraftfahrzeug ohne zwei gekoppelte Achsen anerkannt wird und die Bremsprüfung wie für ein Kraftfahrzeug ohne Allradantrieb vorgenommen wird oder dass, wenn das der weiteren Antriebseinrichtung zugeordnete Rad (60R) versucht, sich in die entgegengesetzte Drehrichtung zu drehen, das Kraftfahrzeug als Kraftfahrzeug mit mindestens zwei angetriebenen Achsen anerkannt wird und die Bremsprüfung entsprechend einem der oben genannten Verfahren 1 bis 9 oder entsprechend einem anderen Verfahren vorgenommen wird.

12. Vorrichtung zur Prüfung der Bremswirkung der einzelnen Bremsen (61L, 61R, 67L, 67R) eines Kraftfahrzeugs (10) mit mindestens zwei angetriebenen Achsen (12, 14), wobei die Räder (60L, 60R, 66L, 66R) jeder angetriebenen Achse (12, 14) miteinander über ein Ausgleichsgetriebe (36) und die angetriebenen Achsen (12, 14) untereinander mit einem starren oder quasi-starren Antriebssystem (24, 28, 30), wie beispielsweise ein Antriebssystem mit beschränktem Schlupf, gekoppelt sind, wobei die Bremsprüfung für die linke und rechte Bremse (61 L, 61 R) einer der Achsen (12) durchgeführt wird, während die Räder (66L, 66R) der anderen Achse (14) stillstehen und die linken und rechten Räder (60L, 60R) der geprüften Achse in unterschiedliche Drehrichtungen durch jeweilige Antriebseinrichtungen (80L, 82L, 92L, 94L, 96L; 80R, 82R, 92R, 94R, 96R) eines Prüfstands gedreht werden, von denen mindestens eine einen getrennt ansteuerbaren Antriebsmotor (92L, 92R) aufweist bzw. von denen jede einen jeweiligen getrennt ansteuerbaren Antriebsmotor aufweist und die ausgelegt sind, um die/das von den Rädern übertragene Bremskraft bzw. -moment bei einer erwünschten Geschwindigkeit zu ermitteln, wobei den Antriebseinrichtungen eine Steuereinrichtung (136) zugeordnet ist,
**dadurch gekennzeichnet, dass** die Steuereinrichtung (136) eine elektronische Einrichtung umfasst, die ein Programm enthält, das ausgelegt ist, um:
a) den Antriebsmotor (92L) eines der linken und rechten Räder (60L, 60R) anzusteuern, um das entsprechende Rad (60L) auf die erwünschte Geschwindigkeit zu bringen,
b) den Antriebsmotor (92R) des jeweils anderen Rades anzusteuern, um dieses bei gelösten Bremsen (61 L, 61 R, 67L, 67R) über einen Geschwindigkeitsbereich anzutreiben, der üblicherweise die erwünschte Geschwindigkeit umfasst, um die jeweilige Geschwindigkeit zu ermitteln, bei der der kleinste Rollwiderstand vorliegt und
c) die Antriebsmotoren (92L, 92R) mindestens für die unmittelbar anschließende Bremsprüfung bei den entsprechenden Geschwindigkeiten anzutreiben, für die der kleinste Rollwiderstand ermittelt wurde.

13. Vorrichtung zur Prüfung der Bremswirkung der einzelnen Bremsen (61 L, 61 R, 67L, 67R) eines Kraftfahrzeugs (10) mit mindestens zwei angetriebenen Achsen (12, 14), wobei die Räder (60L, 60R, 66L, 66R) jeder angetriebenen Achse miteinander über ein Ausgleichsgetriebe (36) und die angetriebenen Achsen (12, 14) untereinander mit einem starren oder quasi-starren Antriebssystem (24, 28, 30), wie beispielsweise ein Antriebssystem mit beschränktem Schlupf, gekoppelt sind, wobei die Bremsprüfung für die linken und rechten Bremsen (61 L, 61 R, 67L, 67R) der gekoppelten Achsen (12, 14) durchgeführt wird, während die entsprechenden Räder (60L, 60R, 66L, 66R) durch jeweilige Antriebseinrichtungen (80L, 82L, 92L, 94L, 96L; 80R, 82R, 92R, 94R, 96R) eines Prüfstands (Fig. 4) in die gleiche , Richtung gedreht werden, die jeweilige getrennt ansteuerbare Antriebsmotoren (92L, 92R) aufweisen und ausgelegt sind, um die/das von den Rädern übertragene Bremskraft bzw. -moment bei einer erwünschten Geschwindigkeit zu ermitteln, wobei den Antriebseinrichtungen eine Steuereinrichtung (136) zugeordnet ist,
**dadurch gekennzeichnet, dass** die Steuereinrichtung (136) eine elektronische Einrichtung umfasst, die ein Programm enthält, das ausgelegt ist, um:
a) die der einen Achse (12) zugeordneten Antriebseinrichtungen (80L, 82L, 92L, 94L, 96L; 80R, 82R, 92R, 94R, 96R), d.h. die diesen zugeordneten Antriebsmotoren (92L, 92R) anzusteuern, um die Räder (60L, 60R) dieser Achse (12) auf die erwünschte Geschwindigkeit zu bringen,
b) die der zweiten Achse (14) zugeordneten Antriebseinrichtungen (80L, 82L, 92L, 94L, 96L; 80R, 82R, 92R, 94R, 96R), d.h. die diesen zugeordneten Antriebsmotoren (92L, 92R), bei gelösten Bremsen anzusteuern, um die Räder (66L, 66R) dieser Achse (14) gemeinsam über einen Geschwindigkeitsbereich anzutreiben, der üblicherweise die erwünschte Geschwindigkeit umfasst, um die Geschwindigkeit dieser Räder (66L, 66R) zu ermitteln, bei der der kleinste Rollwiderstand vorliegt,
c) für jede Achse (12, 14) die Antriebseinrichtung für eines der Räder (60L, 66L) vom jeweiligen Antriebsmotor bei gelösten Bremsen (61L, 61R, 67L, 67R) bei der erwünschten Geschwindigkeit bzw. bei der ermittelten Geschwindigkeit anzutreiben und das jeweils andere Rad (60R, 66R) durch die jeweilige Antriebseinrichtung über einen Geschwindigkeitsbereich anzutreiben, der üblicherweise die erwünschte Geschwindigkeit bzw. die ermittelte Geschwindigkeit umfasst, um die jeweilige Geschwindigkeit zu ermitteln, bei der der kleinste Rollwiderstand vorliegt,
d) die Antriebsmotoren (92L, 92R) mindestens für die unmittelbar anschließende Bremsprüfung bei den entsprechenden Geschwindigkeiten anzutreiben, für die die kleinsten Rollwiderstände ermittelt wurden.

14. Vorrichtung nach Anspruch 12 oder 13 und zur automatischen Ermittlung, ob es sich bei dem Kraftfahrzeug (10), an dem die Bremsprüfung vorgenommen wird, um ein Kraftfahrzeug mit mindestens zwei angetriebenen Achsen (12, 14) handelt,
**dadurch gekennzeichnet, dass** die Steuereinrichtung (136) eine elektronische Einrichtung umfasst, die ein Programm enthält, das ausgelegt ist, um:
zunächst den Antriebsmotor (92L) einer der Antriebseinrichtungen (80L, 82L, 92L, 94L, 96L; 80R, 82R, 92R, 94R, 96R) zu starten und bei der anderen Antriebseinrichtung (80L, 82L, 92L, 94L, 96L; 80R, 82R, 92R, 94R, 96R) oder bei mindestens einer der weiteren Antriebseinrichtungen (80L, 82L, 92L, 94L, 96L; 80R, 82R, 92R, 94R, 96R) er ermitteln, ob das dieser jeweils zugeordnete Rad (60R) in die entgegengesetzte Drehrichtung zu drehen versucht.

15. Verfahren zur Prüfung der Bremswirkung der einzelnen Bremsen (61L, 61 R; 61 L, 61 R, 67L, 67R) eines Kraftfahrzeugs (10) mit mindestens zwei angetriebenen und miteinander mechanisch gekoppelten Achsen (12, 14) mit jeweiligen Rädern (60L, 60R, 66L, 66R), **dadurch gekennzeichnet,**
**dass** für mindestens eine der Achsen (12, 14) ein Rad (60L) bei einer vorgegebenen erwünschten Geschwindigkeit angetrieben wird und für das jeweils andere Rad (60R) der Achse (12, 14) die Geschwindigkeit ermittelt wird, bei der der kleinste Rollwiderstand vorliegt und bei der anschließenden Bremsprüfung dieses Rad (60R) bei der ermittelten Geschwindigkeit angetrieben wird.

## Claims

1. A method for testing the braking effect of the individual brakes (61 L, 61R, 67L, 67R) of a motor vehicle (10) having at least two driven axles (12, 14), wherein the wheels (60L, 60R, 66L, 66R) of each driven axle (12, 14) are coupled to one another via a differential gear (36) and the driven axles (12, 14) are coupled to one another by a rigid or quasi-rigid drive system (24, 28, 30) such as a drive system having restricted slip; wherein the braking test is carried out for the left and right brakes (6 1 L, 6 1 R) of one of the axles (12), while the wheels (66L, 66R) of the other axle (14) are stationary and the left and right wheels (60L, 60R) of the tested axle are rotated in different directions of rotation by respective drive devices (80L, 82L, 92L, 94L, 96L; 80R, 82R, 92R, 94R, 96R) of a test stand, with at least one of said drive devices having a separately controllable drive motor (92L, 92R) or with each of said drive devices having a respective separately controllable drive motor and being designed to determine the braking force or braking torque transmitted by the wheels at a desired speed,
**characterised in that**
a) the drive motor (92L) of one of the left and right wheels (60L, 60R) brings the corresponding wheel (60L) to the desired speed;
b) the drive motor (92R) of the respective other wheel (60R) drives it with released brakes (6 1 L, 6 1 R, 67L, 67R) over a speed range which usually includes the desired speed to determine the respective speed at which the smallest rolling resistance is present; and
c) the drive motors (92L, 92R) are driven for at least the directly subsequent braking test at the corresponding speeds for which the smallest rolling resistance was determined.

2. A method in accordance with claim 1,
**characterised in that**
the respective speed at which the smallest rolling resistance is present is determined again in each case for further braking tests of the respective axle; or **in that** the corresponding speeds are maintained for further braking tests of the respective axle in the respective test run.

3. A method in accordance with claim 2,
**characterised in that**
the rolling resistance determination in each case takes place again automatically after the releasing of the brakes (61L, 61R, 67L, 67R) and, if necessary, the changed speed at which the rolling resistance is the smallest, is used for the next braking test of the same test run.

4. A method in accordance with any one of the preceding claims,
**characterised in that**,
on the testing of the brakes (6 1 L) on the one side of the vehicle at which the wheel (60L) rotates in the normal direction of travel (16), the force acting on the brake pedal or a corresponding value such as the brake line pressure is determined, the direction of rotation of the left and right wheels (60L, 60R) is changed and the braking test is repeated with the same force or with the same value corresponding thereto and only the braking values for the wheels running in the direction of travel or a mean value of the braking values from the two braking tests is taken into account for the test result.

5. A method in accordance with any one of the preceding claims,
**characterised in that**,
after the testing of the brakes (6 1 L, 6 1 R) of the one axle (12), the testing of the brakes (67L, 67R) of the second axle (14) takes place accordingly, while the wheels (60L, 60R) of the first axle are stationary.

6. A method for testing the braking effect of the individual brakes (61L, 61R, 67L, 67R) of a motor vehicle (10) having at least two driven axles (12, 14), wherein the wheels (60L, 60R, 66L, 66R) of each driven axle (12, 14) are coupled to one another via a differential gear (36) and the driven axles (12, 14) are coupled to one another by a rigid or quasi-rigid drive system (24, 28, 30) such as a drive system having restricted slip; wherein the braking test is carried out for the left and right brakes (61L, 61R, 67L, 67R) of the coupled axles (12, 14), while the corresponding wheels (60L, 60R, 66L, 66R) are rotated in the same direction of rotation by respective drive devices (80L, 82L, 92L, 94L, 96L; 80R, 82R, 92R, 94R, 96R) of a test stand (Fig. 4), which have respective separately controllable drive motors (92L, 92R) and are designed to determine the braking force or braking torque transmitted by the wheels at a desired speed,
**characterised in that**
a) the drive devices (80L, 82L, 92L, 94L, 96L; 80R, 82R, 92R, 94R, 96R) associated with the one axle (12), i.e. the drive motors (92L, 92R) associated therewith, are controlled to bring the wheels (60L, 60R) of this axle (12) to the desired speed;
b) the drive devices (80L, 82L, 92L, 94L, 96L; 80R, 82R, 92R, 94R, 96R) associated with the second axle (14), i.e. the drive motors (92L, 92R) associated therewith are controlled with released brakes to drive the wheels (66L, 66R) of this axle (14) together over a speed range which usually includes the desired speed to determine the speed of these wheels (66L, 66R) at which the smallest rolling resistance is present;
c) the drive device for one of the wheels (60L, 66L) for each axle (12, 14) is driven by the respective drive motor with released brakes (6 1 L, 6 1 R, 67L, 67R) at the desired speed or at the determined speed and the respective other wheel (60R, 66R) is driven by the respective drive device over a speed range which usually includes the desired speed or the determined speed to determine the respective speed at which the smallest rolling resistance is present; and
d) the drive motors (92L, 92R) are driven for at least the directly subsequent braking test at the corresponding speeds for which the smallest rolling resistance was determined.

7. A method in accordance with claim 6,
**characterised in that**
the respective speeds at which the smallest rolling resistances are present are in each case determined again for further braking tests of the respective axle in the respective test run; or **in that** the corresponding speeds are maintained for further braking tests.

8. A method in accordance with claim 7,
**characterised in that**
the rolling resistance determination in each case takes place again automatically after the releasing of the brakes (6 1 L, 6 1 R, 67L, 67R) and, if necessary, the changed speed at which the rolling resistance is the smallest, is used for the next braking test of the same test run.

9. A method in accordance with any one of the preceding claims 6 to 8,
**characterised in that**
the relative spacing of the drive devices in the longitudinal direction of the motor vehicle is matched to the respective wheel base of the motor vehicle before the carrying out of the test.

10. A method in accordance with any one of the preceding claims and for the automatic determination of whether the motor vehicle (10) at which the braking test is carried out is a motor vehicle having at least two driven axles (12, 14),
**characterised in that**
the drive motor (92L) of one of the drive devices (80L, 82L, 92L, 94L, 96L; 80R, 82R, 92R, 94R, 96R) is started first and it is determined for the other drive device (80L, 82L, 92L, 94L, 96L; 80R, 82R, 92R, 94R, 96R) or for at least one of the further devices (80L, 82L, 92L, 94L, 96L; 80R, 82R, 92R, 94R, 96R) whether the wheel (60R) respectively associated therewith attempts to rotate in the opposite direction of rotation.

11. A method in accordance with claim 10,
**characterised in that**,
when the wheel (60R) associated with the further drive device does not attempt to rotate in the opposite direction of rotation, the motor vehicle is recognised as a motor vehicle without two coupled axles and the braking test is carried out as for a motor vehicle without allwheel drive; or **in that**, when the wheel (60R) associated with the further drive device attempts to rotate in the opposite direction of rotation, the motor vehicle is recognised as a motor vehicle having at least two driven axles and the braking test is carried out in accordance with one of the aforesaid methods 1 to 9 or in accordance with another method.

12. An apparatus for testing the braking effect of the individual brakes (61L, 61R, 67L, 67R) of a motor vehicle (10) having at least two driven axles (12, 14), wherein the wheels (60L, 60R, 66L, 66R) of each driven axle (12, 14) are coupled to one another via a differential gear (36) and the driven axles (12, 14) are coupled to one another by a rigid or quasi-rigid drive system (24, 28, 30) such as a drive system having restricted slip; wherein the braking test is carried out for the left and right brakes (6 1 L, 6 1 R) of one of the axles (12), while the wheels (66L, 66R) of the other axle (14) are stationary and the left and right wheels (60L, 60R) of the tested axle are rotated in different directions of rotation by respective drive devices (80L, 82L, 92L, 94L, 96L; 80R, 82R, 92R, 94R, 96R) of a test stand, with at least one of said drive devices having a separately controllable drive motor (92L, 92R) or with each of said drive devices having a respective separately controllable drive motor and being designed to determine the braking force or braking torque transmitted by the wheels at a desired speed, wherein a control device (136) is associated with the drive devices,
**characterised in that** the control device (136) includes an electronic device containing a program designed to
a) control the drive motor (92L) of one of the left and right wheels (60L, 60R) to bring the corresponding wheel (60L) to the desired speed;
b) control the drive motor (92R) of the respective other wheel (6 1 R) to drive it with released brakes (6 1 L, 67R, 67L, 67R) over a speed range which usually includes the desired speed to determine the respective speed at which the smallest rolling resistance is present; and
c) to drive the drive motors (92L, 92R) for at least the directly subsequent braking test at the corresponding speeds for which the smallest rolling resistance was determined.

13. An apparatus for testing the braking effect of the individual brakes (61L, 61R, 67L, 67R) of a motor vehicle (10) having at least two driven axles (12, 14), wherein the wheels (60L, 60R, 66L, 66R) of each driven axle are coupled to one another via a differential gear (36) and the driven axles (12, 14) are coupled to one another by a rigid or quasi-rigid drive system (24, 28, 30) such as a drive system having restricted slip; wherein the braking test is carried out for the left and right brakes (61L, 61R, 67L, 67R) of the coupled axles (12, 14), while the corresponding wheels (60L. 60R, 66L, 66R) are rotated in the same direction of rotation by respective drive devices (80L, 82L, 92L, 94L, 96L; 80R, 82R, 92R, 94R, 96R) of a test stand (Fig. 4), which have respective separately controllable drive motors (92L, 92R) and are designed to determine the braking force or braking torque transmitted by the wheels at a desired speed, wherein a control device (136) is associated with the drive devices, **characterised in that** the control device (136) includes an electronic device containing a program designed to
a) control the drive devices (80L, 82L, 92L, 94L, 96L; 80R, 82R, 92R, 94R, 96R) associated with the one axle (12), i.e. the drive motors (92L, 92R) associated therewith, to bring the wheels (60L, 60R) of this axle (12) to the desired speed;
b) to control the drive devices (80L, 82L, 92L, 94L, 96L; 80R, 82R, 92R, 94R, 96R) associated with the second axle (14), i.e. the drive motors (92L, 92R) associated therewith, with released brakes to drive the wheels (66L, 66R) of this axle (14) together over a speed range which usually includes the desired speed to determine the speed of these wheels (66L, 66R) at which the smallest rolling resistance is present;
c) to drive the drive device for one of the wheels (60L, 66L) for each axle (12, 14) by the respective drive motor with released brakes (61L, 61R, 67L, 67R) at the desired speed or at the determined speed and to drive the respective other wheel (60R, 66R) by the respective drive device over a speed range which usually includes the desired speed or the determined speed to determine the respective speed at which the smallest rolling resistance is present; and
d) to drive the drive motors (92L, 92R) for at least the directly subsequent braking test at the corresponding speeds for which the smallest rolling resistance were determined.

14. A method in accordance with claim 12 or claim 13 and for the automatic determination of whether the motor vehicle (10) at which the braking test is carried out is a motor vehicle having at least two driven axles (12, 14),
**characterised in that** the control device (136) includes an electronic device containing a program designed to
first start the drive motor (92L) of one of the drive devices (80L, 82L, 92L, 94L, 96L; 80R, 82R, 92R, 94R, 96R) and to determine for the other drive device (80L, 82L, 92L, 94L, 96L; 80R, 82R, 92R, 94R, 96R) or for at least one of the further devices (80L, 82L, 92L, 94L, 96L; 80R, 82R, 92R, 94R, 96R) whether the wheel (60R) respectively associated therewith attempts to rotate in the opposite direction of rotation.

15. A method for testing the braking effect of the individual brakes (61L, 61 R; 61 L, 61 R, 67L, 67R) of a motor vehicle (10) having at least two axles (12, 14) which are driven and are mechanically coupled to one another and having respective wheels (60L, 60R, 66L, 66R), **characterised in that**
a wheel (60L) for at least one of the axles (12, 14) is driven at a preset desired speed and the speed is determined for the respective other wheel (60R) of the axle (12, 14) at which the smallest rolling resistance is present and this wheel (60R) is driven at the determined speed in the subsequent braking test.

## Revendications

1. Procédé pour contrôler l'effet de freinage des freins individuels (61L, 61R, 67L, 67R) d'un véhicule automobile (10) avec au moins deux essieux entraînés (12, 14), dans lequel les roues (60L, 60R, 66L, 66R) de chaque essieu entraîné (12, 14) sont couplées l'une à l'autre via un mécanisme différentiel (36) et les essieux entraînés (12, 14) sont couplés les uns aux autres avec un système d'entraînement (24, 28, 30) rigide ou quasi rigide, comme par exemple un système d'entraînement à glissement limité, le contrôle du freinage étant exécuté pour le frein gauche et pour le frein droit (6 1 L, 6 1 R) de l'un des essieux (12) tandis que les roues (66L, 66R) de l'autre essieu (14) sont immobiles et les roue gauche et droite (60L, 60R) de l'essieu contrôlé sont mises en rotation dans des sens de rotation différents par des moyens d'entraînement respectifs (80L, 82L, 92L, 94L, 96L ; 80R, 82R, 92R, 94R, 96R) d'un banc de contrôle, parmi lesquels l'un au moins comprend un moteur d'entraînement (92L, 92R) capable d'être piloté séparément, ou bien parmi lesquels chacun comprend un moteur d'entraînement capable d'être piloté respectivement séparément, et qui sont conçus pour déterminer la force ou le couple de freinage transmis aux roues à une vitesse souhaitée,
**caractérisé en ce que**
a) le moteur d'entraînement (92L) de l'une des roues gauche et droite (60R, 60L) amène la roue correspondante (60L) à la vitesse souhaitée,
b) le moteur d'entraînement (92R) de l'autre roue respective (60R) entraîne celle-ci, les freins étant desserrés (61L, 61R, 67L, 67R) sur une plage de vitesse qui englobe habituellement la vitesse souhaitée, afin de déterminer la vitesse respective à laquelle se présente la plus faible résistance au roulement, et
c) les moteurs d'entraînement (92L, 92R) sont amenés à fonctionner, au moins pour le contrôle des freins qui s'ensuit directement, à la vitesse correspondante pour laquelle on a déterminé la plus faible résistance au roulement.

2. Procédé selon la revendication 1,
**caractérisé en ce que** la vitesse respective à laquelle se présente la plus faible résistance au roulement est déterminée à chaque fois à nouveau pour d'autres contrôles des freins de l'essieu respectif, ou respectivement **en ce que** les vitesses correspondantes sont conservées pour d'autres contrôles des freins de l'essieu respectif à chaque processus de contrôle.

3. Procédé selon la revendication 2,
**caractérisé en ce que** la détermination de la résistance au roulement a lieu à chaque fois automatiquement après le desserrage des freins (6 1 L, 61 R, 67L, 67R) et, si nécessaire, la vitesse modifiée pour laquelle la résistance au roulement est la plus faible est utilisée pour le prochain contrôle des freins du même processus de contrôle.

4. Procédé selon l'une des revendications précédentes,
**caractérisé en ce que** lors du contrôle du frein (61L) sur un côté du véhicule, dans lequel la roue (60L) tourne dans la direction de circulation normale (16), on détermine la force agissant sur la pédale de frein ou une valeur correspondante, comme par exemple la pression dans la conduite de frein, le sens de rotation des roue gauche et droite (60L, 60R) est modifié, et le contrôle des freins est répété avec la même force ou respectivement avec la même valeur correspondant à celle-ci, et on tient compte pour le résultat du contrôle uniquement des valeurs de freinage pour les roues qui tournent dans la direction de circulation ou bien d'une valeur moyenne des valeurs de freinage provenant des deux contrôles de frein.

5. Procédé selon l'une des revendications précédentes,
**caractérisé en ce que**, après le contrôle des freins (61L, 61R) d'un essieu (12) on procède au contrôle correspondant des freins (67L, 67R) du second essieu (14) tandis que les roues (60L, 60R) du premier essieu sont immobiles.

6. Procédé pour le contrôle de l'effet de freinage des freins individuels (61L, 61R, 67L, 67R) d'un véhicule automobile (10) comprenant au moins deux essieux entraînés (12, 14), dans lequel les roues (60L, 60R, 66L, 66R) de chaque essieu entraîné sont couplées l'une à l'autre via un mécanisme différentiel (36) et les essieux entraînés (12, 14) sont couplés l'un à l'autre avec un système d'entraînement rigide ou quasi rigide (24, 28, 30), comme par exemple un système d'entraînement avec glissement limité, dans lequel le contrôle pour les freins gauche et droit (61L, 61R, 67L, 67R) des essieux accouplés (12, 14) est effectué tandis que les roues correspondantes (60L, 60R, 66L, 66R) sont mises en rotation dans la même direction par des moyens d'entraînement respectifs (80L, 82L, 92L, 94L, 96L ; 80R, 82R, 92R, 94R, 96R) d'un banc de contrôle (figure 4), lesquels comprennent des moteurs d'entraînement respectifs (92L, 92R) capables d'être pilotés séparément et sont conçus pour déterminer la force de freinage ou le couple de freinage transmis aux roues à une vitesse souhaitée,
**caractérisé en ce que** :
a) les moyens d'entraînement (80L, 82L, 92L, 94L, 96L ; 80R, 82R, 92R, 94R, 96R) associés à un essieu (12), c'est-à-dire les moteurs d'entraînement (92L, 92R) associés à ces moyens sont pilotés pour amener les roues (60L, 60R) de cet essieu (12) à la vitesse souhaitée,
b) les moyens d'entraînement (80L, 82L, 92L, 94L, 96L ; 80R, 82R, 92R, 94R, 96R) associés au deuxième essieu (14), c'est-à-dire les moteurs d'entraînement (92L, 92R) associés à ces moyens sont pilotés, les freins étant desserrés, afin d'entraîner conjointement les roues (66L, 66R) de cet essieu (14) sur une plage de vitesse qui comprend habituellement la vitesse souhaitée, afin de déterminer la vitesse de ces roues (66L, 66R) pour laquelle se présente la plus faible résistance au roulement,
c) pour chaque essieu (12, 14), le moyen d'entraînement pour l'une des roues (60L, 66L) est entraîné par le moteur d'entraînement respectif, les freins (61L, 61R, 67L, 67R) étant desserrés, à la vitesse souhaitée ou respectivement à la vitesse déterminée, et l'autre roue respective (60R, 66R) est entraînée par le moyen d'entraînement respectif sur une plage de vitesse qui inclut habituellement la vitesse souhaitée ou la vitesse déterminée, afin de déterminer la vitesse respective à laquelle se présente la plus faible résistance au roulement,
d) les moteurs d'entraînement (92L, 92R) sont entraînés, au moins pour le contrôle des freins qui s'ensuit directement, aux vitesses correspondantes pour lesquelles on a déterminé les plus faibles résistances au roulement.

7. Procédé selon la revendication 6,
**caractérisé en ce que** les vitesses respectives pour lesquelles se présentent les plus faible résistances au roulement sont déterminées à nouveau à chaque fois pour d'autres contrôles des freins de l'essieu respectif à chaque processus de contrôle, ou **en ce que** les vitesses correspondantes sont conservées pour d'autres contrôles des freins.

8. Procédé selon la revendication 7,
**caractérisé en ce que** la détermination de la résistance au roulement a lieu à chaque fois à nouveau après le desserrage des freins (61 L, 61 R, 67L, 67R) et, si nécessaire, les vitesses modifiées, pour lesquelles les résistances au roulement sont les plus faibles, sont utilisées pour le prochain contrôle des freins du même processus de contrôle.

9. Procédé selon l'une des revendications 6 à 8,
**caractérisé en ce que**, avant d'exécuter le contrôle, la distance relative des moyens d'entraînement, en direction longitudinale du véhicule automobile, est adaptée à l'empattement respectif du véhicule automobile.

10. Procédé selon l'une des revendications précédentes et destiné à déterminer automatiquement si le véhicule (10) sur lequel on exécute le contrôle des freins est un véhicule avec au moins deux essieux entraînés (12, 14),
**caractérisé en ce que** l'on démarre tout d'abord le moteur d'entraînement (92L) de l'un des moyens d'entraînement (80L, 82L, 92L, 94L, 96L ; 80R, 82R, 92R, 94R, 96R), et l'on détermine pour l'autre moyen d'entraînement (80L, 82L, 92L, 94L, 96L ; 80R, 82R, 92R, 94R, 96R) ou pour l'un au moins des autres moyens d'entraînement (80L, 82L, 92L, 94L, 96L ; 80R, 82R, 92R, 94R, 96R), si la roue (60R) associée respectivement à celui-ci tente de tourner dans le sens de rotation opposé.

11. Procédé selon la revendication 10,
**caractérisé en ce que** si la roue (60R) associée à l'autre moyen d'entraînement ne tente pas de tourner dans le sens de rotation opposé, le véhicule automobile est reconnu comme étant un véhicule automobile qui ne possède pas deux essieux couplés, et le contrôle des freins est exécuté comme pour un véhicule dépourvu d'entraînement sur toutes les roues, ou bien **en ce que** si la roue (60R) associée à l'autre moyen d'entraînement tente de tourner dans le sens de rotation opposé, le véhicule automobile est reconnu comme étant un véhicule automobile avec au moins deux essieux entraînés, et le contrôle des freins est exécuté selon le procédé de l'une des revendications 1 à 9 citées ci-dessus, ou selon un autre procédé.

12. Appareil pour contrôler l'effet de freinage des freins individuels (61L, 61R, 67L, 67R) d'un véhicule automobile (10) avec au moins deux essieux entraînés (12, 14), dans lequel les roues (60L, 60R, 66L, 66R) de chaque essieu entraîné (12, 14) sont couplées l'une à l'autre via un mécanisme différentiel (36) et les essieux entraînés (12, 14) sont couplés les uns aux autres avec un système d'entraînement rigide ou quasi rigide (24, 28, 30), comme par exemple un système d'entraînement avec glissement limité, le contrôle des freins est exécuté pour le frein gauche et le frein droit (61L, 61R) de l'un des essieux (12), tandis que les roues (66L, 66R) de l'autre essieu (14) sont immobiles et les roues gauche et droite (60L, 60R) de l'essieu contrôlé sont mises en rotation dans des sens de rotation différents par des moyens d'entraînement respectifs (80L, 82L, 92L, 94L, 96L ; 80R, 82R, 92R, 94R, 96R) d'un banc de contrôle, parmi lesquels au moins un moyen d'entraînement comprend un moteur d'entraînement (92L, 92R) capable d'être piloté séparément, ou parmi lesquels chacun comprend un moteur d'entraînement respectif capable d'être piloté séparément, et qui sont conçus pour déterminer la force de freinage ou le couple de freinage transmis par les roues à une vitesse souhaitée, et dans lequel un système de commande (136) est associé au moyen d'entraînement,
**caractérisé en ce que** le système de commande (136) comprend des moyens électroniques qui contiennent un programme conçu pour :
a) piloter le moteur d'entraînement (92L) de l'une des roues gauche et droite (60L, 60R) afin d'amener la roue correspondante (60L) à la vitesse souhaitée,
b) piloter le moteur d'entraînement (92R) de l'autre roue respective afin d'entraîner celle-ci, tandis que les freins (61L, 61R, 67L, 67R) sont desserrés, sur une plage de vitesse qui inclut habituellement la vitesse souhaitée, afin de déterminer la vitesse respective à laquelle se présente la plus faible résistance au roulement, et
c) piloter les moteurs d'entraînement (92L, 92R), au moins pour le contrôle de freinage qui s'ensuit directement, aux vitesses correspondantes pour lesquelles on a déterminé la plus faible résistance au roulement.

13. Appareil pour contrôler l'effet de freinage des freins individuels (61L, 61R, 67L, 67R) d'un véhicule automobile (10) avec au moins deux essieux entraînés (12, 14), dans lequel les roues (60L, 60R, 66L, 66R) de chaque essieu entraîné sont couplés l'une à l'autre via un mécanisme différentiel (36) et les essieux entraînés (12, 14) sont couplés les uns aux autres avec un système d'entraînement rigide ou quasi rigide (24, 28, 30), comme par exemple un système d'entraînement avec glissement limité, dans lequel le contrôle des freins pour les freins gauche et droit (61L, 61R, 67L, 67R) des essieux accouplés (12, 14) est exécuté tandis que les roues correspondantes (60L, 60R, 66L, 66R) sont mises en rotation dans la même direction par des moyens d'entraînement respectifs (80L, 82L, 92L, 94L, 96L ; 80R, 82R, 92R, 94R, 96R) d'un banc de contrôle (figure 4), ces moyens d'entraînement comprenant des moteurs d'entraînement respectifs (92L, 92R) capables être pilotés séparément, afin de déterminer la force de freinage ou le couple de freinage transmis par les roues à une vitesse souhaitée, un système de commande (136) étant associé aux moyens d'entraînement,
**caractérisé en ce que** le système de commande (136) comprend des moyens électroniques qui contiennent un programme conçu pour :
a) piloter les moyens d'entraînement (80L, 82L, 92L, 94L, 96L ; 80R, 82R, 92R, 94R, 96R) associés à un essieu (12), c'est-à-dire les moteurs d'entraînement (92L, 92R) associés à ces moyens pour amener les roues (60L, 60R) de cet essieu (12) à la vitesse souhaitée,
b) piloter les moyens d'entraînement (80L, 82L, 92L, 94L, 96L ; 80R, 82R, 92R, 94R, 96R) associés au deuxième essieu (14), c'est-à-dire les moteurs d'entraînement (92L, 92R) associés à ces moyens, les freins étant desserrés, afin d'entraîner conjointement les roues (66L, 66R) de cet essieu (14) sur une plage de vitesse qui comprend habituellement la vitesse souhaitée, afin de déterminer la vitesse de ces roues (66L, 66R) pour laquelle se présente la plus faible résistance au roulement,
c) entraîner, pour chaque essieu (12, 14), le moyen d'entraînement pour l'une des roues (60L, 66L) par le moteur d'entraînement respectif, les freins (61L, 61R, 67L, 67R) étant desserrés, à la vitesse souhaitée ou respectivement à la vitesse déterminée, et entraîner l'autre roue respective (60R, 66R) par le moyen d'entraînement respectif sur une plage de vitesse qui inclut habituellement la vitesse souhaitée ou la vitesse déterminée, afin de déterminer la vitesse respective à laquelle se présente la plus faible résistance au roulement,
d) entraîner les moteurs d'entraînement (92L, 92R), au moins pour le contrôle des freins qui s'ensuit directement, aux vitesses correspondantes pour lesquelles on a déterminé les plus faibles résistances au roulement.

14. Appareil selon la revendication 12 ou 13, et destiné à déterminer automatiquement si le véhicule (10) sur lequel on exécute le contrôle des freins est un véhicule avec au moins deux essieux entraînés (12, 14),
**caractérisé en ce que** le système de commande (136) comprend des moyens électroniques qui contiennent un programme conçu pour :
démarrer tout d'abord le moteur d'entraînement (92L) de l'un des moyens d'entraînement (80L, 82L, 92L, 94L, 96L ; 80R, 82R, 92R, 94R, 96R), et déterminer pour l'autre moyen d'entraînement (80L, 82L, 92L, 94L, 96L ; 80R, 82R, 92R, 94R, 96R) ou pour l'un au moins des autres moyens d'entraînement (80L, 82L, 92L, 94L, 96L ; 80R, 82R, 92R, 94R, 96R), si la roue (60R) associée respectivement à celui-ci tente de tourner dans le sens de rotation opposé.

15. Procédé pour contrôler l'effet de freinage des freins individuels (61L, 61R, 67L, 67R) d'un véhicule automobile (10) avec au moins deux essieux entraînés (12, 14) et couplés mécaniquement l'un à l'autre, avec des roues respectives (60L, 60R, 66L, 66R),
**caractérisé en ce que**
pour l'un au moins des essieux (12, 14), on entraîne une roue (60L) à une vitesse prédéterminée souhaitée, et on détermine pour l'autre roue respective (60R) de l'essieu (12, 14) la vitesse à laquelle se présente la plus faible résistance au roulement et, lors du contrôle des freins qui s'ensuit, cette roue (60R) est entraînée à la vitesse déterminée.
